# EUROPÄISCHE PATENTSCHRIFT

(11) **EP 1 042 993 B1**
(45) Veröffentlichungstag und Bekanntmachung des Hinweises auf die Patenterteilung: **04.06.2003**
(21) Anmeldenummer: 00103859.5
(22) Anmeldetag: 05.03.1997
(51) Int. Cl.: A61C 9/00

(54) **Vorrichtung zum Herstellen von Zahnabdrücken**
Device for making dental impressions
Dispositif pour l' obtention d'empreintes dentaires

(30) Priorität: 06.03.1996 DE 19608546; 09.07.1996 DE 19627517
(43) Veröffentlichungstag der Anmeldung: 11.10.2000
(62) Teilanmeldung aus: 97906170.2
(73) Patentinhaber: Hahn, Rainer, Dr., 72074 Tübingen (DE)
(72) Erfinder: Hahn, Rainer, Dr., 72074 Tübingen (DE)
(74) Vertreter: Ostertag, Reinhard

(56) Entgegenhaltungen:
- EP-A- 0 519 195
- DE-A- 4 130 701
- DE-U- 9 313 561
- US-A- 1 437 844

## Beschreibung

Die Erfindung betrifft eine Vorrichtung zum Herstellen von Zahnabdrücken gemäß dem Oberbegriff des Anspruches 1.

Eine derartige Vorrichtung ist in der DE 93 13 561 U1 beschrieben. Diese soll eine Abformung des Zahns bzw. Zahnstumpfs im Bereich des Sulcus ermöglichen, ohne daß dort gelegene Hohlräume nicht von der Abdruckmasse erfaßt werden. Dies wird durch eine spezielle Anordnung von Injektionskanälen für die Abformmasse innerhalb des Abdrucklöffels erreicht. Dadurch wird die Abdruckmasse vertikal von oben gegen die Zahnreihen geführt und ein Druck der Abformmasse auf das die Zähne umgebende Zahnfleisch ausgeübt, so daß der Sulcus freigelegt wird. Die Austrittsgeschwindigkeit der Abdruckmasse aus dem Injektionskanal kann durch ein an das Löffelinnere angelegtes Vakuum erhöht werden. So erhält man nach dem Stand der Technik eine verbesserte Abformung im Bereich des Sulcus.

Eine ähnliche Vorrichtung ist in der DE 41 30 701 A1 offenbart.

In der Praxis erhält man mit einer solchen bekannten Vorrichtung keine vollständig zufriedenstellenden Zahnabdrücke.

Durch die vorliegende Erfindung soll eine Vorrichtung zum Herstellen von Zahnabdrücken gemäß dem Oberbegriff des Anspruches 1 so weitergebildet werden, daß man sehr gut paßgenaue Abdrücke erhält.

Diese Aufgabe ist erfindungsgemäß gelöst durch eine Vorrichtung, welche die im Anspruch 1 angegebenen Merkmale aufweist.

Die Unterdruckbeaufschlagung im angegebenen Druckbereich gewährleistet einen sicheren Sitz des Löffels im Mund des Patienten und gleichzeitig, daß von den freien Rändern des Löffels keine unzulässig großen Kräfte auf die Weichgewebe im Mund des Patienten ausgeübt werden.

Mit einer erfindungsgemäßen Vorrichtung zum Herstellen von Zahnabdrücken werden folgende Funktionen und Vorteile erhalten:
1. Der Löffel wird sowohl bei der Anwendung an einem Oberkiefer als auch bei der Anwendung an einem Unterkiefer sauber positioniert und gut fixiert, und zwar unabhängig von Bewegungen von Schleimhäuten oder der Zunge. Der Löffel braucht nicht durch den Zahnarzt oder durch Hilfspersonal gehalten zu werden. Auf diese Weise ist nicht nur das Handling wesentlich vereinfacht, das Herstellen eines Abdruckes erfolgt auch für den Patienten angenehmer.
2. Der Löffel ist am Rand dicht abgeschlossen, so daß kein flüssiges Abformmaterial aus dem Löffel herausläuft und z.B. in den Rachen gelangt.
3. Durch die erfindungsmäß vorgesehene Unterdruckbeaufschlagung des Abformraumes, der zum einen durch den Löffel zum anderen durch die Zähne des Patienten und das die Zähne umgebende Zahnfleisch begrenzt wird, wird auch erreicht, daß sich die Zahnfleischränder geringfügig von den Zahnhälsen abheben, so daß das zunächst flüssige Abformmaterial auch den nahe am Zahnfleischsaum liegenden Bereich der Zähne gut abformt.
4. Im Einsatz der erfindungsgemäßen Vorrichtung hat man den schon oben angesprochenen abgeschlossenen Abformraum. Dieser kann vor dem Ausfüllen mit einem Abformmaterial oder auch in Anwendungssituationen, welche nicht in Zusammenhang mit Abformungen stehen, auch zur selektiven Anwendung von Therapeutika verwendet werden, insbesondere in Form von Flüssigkeiten, Aerosolen oder Gasen. Es kann sich hierbei beispielsweise um blutstillende Mittel, Netzmittel, Adstringenzien, Desinfektionsmittel, Fluoridlösungen, desensibilisierende Substanzen, Desodorantien, Geschmacksstoffe, Substanzen zur Parodontalbehandlung, Substanzen zur Kariesprophylaxe, die Plaquebildung beinflussende Substanzen, Netzmittel wie Natriumlaurylsulfat, Antiadhäsiva in Form von flüssigen Lösungen oder Aerosolen, z.B. Delmopinol- oder Triclosan-Lösungen, Mittel zur Manipulation der Speicheldrüsensekretion oder physikalische Therapeutika wie Wasser, Warmluft und dergleichen handeln.
5. Bei der erfindungsgemäßen Vorrichtung hat man einen gerichteten Fluß von Flüssigkeiten, z.B. der oben erwähnten Therapeutika oder der Abformmasse vom Abformmaterial -Anschlußelement über einen vorgegebenen Strömungsweg zum Vakuum-Anschlußelement. Diese zugeführten Flüssigkeiten schieben auf dem beschriebenen Strömungsweg angefundene Flüssigkeiten wie Speichel und Blut vor sich her. Auf diese Weise wird ein vollständiges Ausfüllen des Abformraumes gewährleistet. Dabei erfolgt die Relativbewegung zwischen den Flüssigkeiten und den Zahnlängsachsen unter einem von Null verschiedenen Winkel, vorzugsweise einem bei 90° liegenden Winkel. Dabei kann man bevorzugte Fließrichtungen von distal nach mesial oder umgekehrt oder von bukkal nach oral oder umgekehrt einrichten. Bei den herkömmlichen Abformtechniken wird der mit dem Abformmaterial gefüllte Löffel in zur Kieferebene senkrechter Richtung auf den Kiefer aufgesetzt, was bedeutet, daß die Relativbewegung zwischen Abformmaterial und den. Zähnen parallel zur Zahnlängsachse erfolgt.
6. Beim Einsatz der erfindungsgemäßen Vorrichtung kann man auch das Herstellen des Zahnabdruckes mit einem therapeutischen Effekt kombinieren, etwa dadurch, daß man dem Abformmaterial selbst ein Therapeutikum zusetzt.
   Auch kann man verschiedene Schritte der Abdruckherstellung zusammenfassen, etwa dadurch, daß man anstelle des Aufbringens eines Netzmittels auf die abzuformenden Oberflächen in einem vorbereitenden Schritt oder bei der Materialherstellung dieses Netzmittel dem Abformmaterial selbst beigibt, so daß der Vorbereitungsschritt eingespart werden kann.

Die flüssigen härtbaren Abformmaterialien, die in der erfindungsgemäßen Vorrichtung verwendet werden, haben verglichen mit Wasser verhältnismäßig hohe Viskosität, wie sie für die sogenannten "dünnfließenden" Abformoder Korrekturmassen, die zur intraoralen Abformung verwendet werden, (Gegensatz: knetartige Abformmassen) typisch ist. Aus diesem Grunde werden sie unter positivem Druck dem Abformmaterial-Anschlußelement zugeführt, und der im Abformraum aufgebaute Unterdruck wird so gewählt, daß einerseits die gewünschte gute Randabdichtung des Löffels und der gewünschte gute Sitz des Löffels gewährleistet ist, andererseits aber in den mit den Löffelrändern zusammenarbeitenden Geweben keine Hämatome entstehen und stärkere Schmerzen des Patienten vermieden werden.

Der angelegte Unterdruck und der Einspeisedruck für das Abformmaterial sowie die Füllmenge pro Zeiteinheit und die Viskosität der Abformmasse sind aufeinander abgestimmt. Bei laufender Befüllung des Abformraumes wird der Unterdruck und der Einspeisedruck im wesentlichen konstant gehalten, so daß das Abformmaterial den Abformraum mit gleichbleibender Geschwindigkeit füllt (also insbesondere ohne Stillstand), wobei die Front des Abformmateriales im Abformraum angefundene Flüssigkeiten (Wasser, Speichel, Blut) vor sich herschiebt. Diese Flüssigkeiten werden dann über das Vakuum-Anschlußelement abgesaugt. Durch dieses kontinuierliche Füllen des Abformraumes ist gewährleistet, daß keine eingeschlossenen Blasen an durch Zähne gegen die Füllrichtung gebildeten Schattenzonen im Abdruck erhalten werden.

Alternativ kann man bei der laufenden Befüllung des Abformraumes den Unterdruck zunächst absenken und gegen Ende des Füllvorganges etwas ansteigen lassen, wobei die Führung des Unterdruckes und/oder des Förderdruckes insgesamt so erfolgt, daß ein kontinuierlicher Fluß des Abformmateriales erreicht wird. Dabei wird vorzugsweise darauf geachtet, daß das Abformmaterial innerhalb des Löffels nicht zum Stillstand kommt.

Die bei der erfindungsgemäßen Vorrichtung bevorzugt senkrecht zur Zahnlängsachse erfolgende Befüllung des Abformraumes unter Vakuum gewährleistet insbesondere, daß auch unter dem Zahnäquator liegende Unterschnitte und Zahnzwischenräume verzugfrei und vollständig abgeformt werden. Auch werden die Zahnoberflächen weitgehend druckfrei abgeformt, wodurch Fehler durch elastische Rückstellung des Abformmateriales oder durch etwaige Wirbelbildungen an scharfen Zahnkanten, z.B. im Bereich von Präparationsrändern vermieden werden.

Das Herstellen von Zahnabdrücken unter Verwendung der erfindungsgemäßen Vorrichtung erfolgt mit hoher Erfolgssicherheit, unter Zeitersparnis und in für den Patienten angenehmerer Weise. Dabei werden präzisere Zahnabdrücke als bei herkömmlichen Techniken erhalten. Dies bedeutet nicht nur, daß die Abdrücke kleinere Toleranzen aufweisen, sondern auch, daß eine bessere Benetzung von mehr Oberflächen erfolgt, auch von ungünstiger gelegenen Oberflächen.

Wie schon oben dargelegt, wird bei Anwendung der erfindungsgemäßen Vorrichtung die bewegliche marginale Gingiva von den festen benachbarten Zahnoberflächen abgehoben. Auf diese Weise kann gerade der Bereich des Zahnfleischsaumes gut abgeformt werden. Dies ist dann besonders wichtig, wenn Zähne z.B. zur Aufnahme von Kronen präpariert sind. Die Präparationsgrenze liegt häufig auf Höhe des Zahnfleischsaumes (paramarginal) oder sogar apikal (wurzelwärts) dieses Bereiches (subgingival). Zu dessen vollständiger Erfassung und zur notwendigen Erfassung von etwa 1 mm Zahnwurzeloberfläche, apikal der Präparationsgrenze (erforderlich zur korrekten Konturgestaltung der Krone) kann das Abformmaterial bei Anwendung der erfindungsgemäßen Vorrichtung zwischen Zahnfleisch und Zahnwurzeloberfläche einfließen.

Dieses Abformen wird durch das schon angesprochene Abheben des Zahnfleischsaumes unter dem einwirkenden Vakuum ermöglicht, wobei zusätzlich aber auch der schon oben beschriebene gerichtete Fluß des Abformmateriales günstig ist, da die im Zwischenraum zwischen Zahnfleischsaum und Zahnoberfläche im Zahnfleischsulcus bzw. in Zahnfleischtaschen vorhandene Flüssigkeitssäule (Speichel oder Sulcusfluid) vom Abformmaterial gerichtet verdrängt wird. Ein derartiges Verdrängen erfolgt bei herkömmlichen Abformtechniken nicht, da bei diesen die Zähne von okklusal her mit Abformmaterial in Berührung kommen, was bedeutet, daß die verschiedenen Abschnitte eines Zahnfleischsaumes eines Zahnes etwa gleichzeitig mit Abformmaterial überschichtet werden. Damit ist die zwischen Zahnfleischsaum und Zahnoberfläche liegende Flüssigkeitssäule eingeschlossen, und da sie nicht komprimiert werden kann, erhält man im fertigen Abdruck eine entsprechende blasenähnliche Fehlstelle, oder es wird die Abformung subgingival liegender Zahn- oder präparierter Zahnoberflächen verhindert.

Es versteht sich, daß diese im Bereich des marginalen Zahnfleischsaumes lokalisierten Zahnoberflächen vor Einbringen des erfindungsgemäßen Löffels in den Mund des Patienten nach Trocknung im Luftstrom auch zunächst mit einem dünnfließenden Abformmaterial umspritzt werden können. Anschließend an dieses erste Umspritzen wird dann der erfindungsgemäße Löffel aufgesetzt, mit Vakuum beaufschlagt und mit Abformmaterial gefüllt. Das Abformmaterial ist so ausgewählt, daß es zu dem zuerst aufgebrachten dünnfließenden Abformmaterial kompatibel ist und sich mit letzterem im Zuge der Erhärtung verbindet. Das zunächst manuell angespritzte Abformmaterial dient gleichzeitig auch als Platzhalter, welcher ein Wiederauffüllen tiefer Taschen mit Flüssigkeiten etwa wie Sulcusfluid oder Blut aus dem Taschenfundus nach deren vorausgehender Trocknung verhindert. Bei dem vorgenannten Vorgehen werden Teile des voreingespritzten Materiales verdrängt, andere durchmischen sich mit dem später unter Verwendung des erfindungsgemäßen Löffels eingebrachten Abformmaterial. Eventuell zwischenzeitlich aufgetretene Einblutungen werden wiederum vor der Front des in den Löffel eingebrachten Abformmateriales hergeschoben und an einem der Vakuum-Anschlußelemente abgesaugt. Dieses Vorgehen hat sich z.B. bei Patienten mit tiefen Zahnfleischtaschen und subgingivalen Präparationen bewährt.

Es hat sich besonders bewährt, vor der Abformung einen Retraktionsfaden in die Zahnfleischsulci vorzugsweise der präparierten oder zu präparierenden Zähne einzulegen und diesen bis nach erfolgter Abformung in situ zu lassen, womit die Abformung para- oder subgingivaler präparierter Zahnoberflächen mit der erfindungsgemäßen Methode weiterhin vereinfacht und präzisiert wird.

Ferner kann auf diese Weise insbesondere bei entzündeter Gingiva (Zahnfleisch), die eine erhöhte Blutungsneigung aufweist, der Blutzutritt in den vakuumbeaufschlagten Abformlöffel sorgfältig vermieden werden.

Der Retraktionsfaden kann mit therapeutischen Wirkstoffen, z.B. zur Blutstillung imprägniert sein.

Bei zu präparierenden Zähnen mit para- oder subgingival zu extendierender Präparationsgrenze und etwa tieferen Zahnfleischtaschen hat es sich besonders bewährt, vor Präparationsbeginn (einen oder) mehrere Retraktionsfäden übereinander in die Zahnfleischtaschen einzulegen, um somit eine Verletzung des marginalen Zahnfleischsaumes durch die Präparationsinstrumente vorzubeugen, wobei wenigstens der am weitestens apikale Retraktionsfaden bis nach erfolgter Abformung in situ verbleibt.

Dadurch, daß man eine Mehrzahl symmetrisch zur Mittelebene angeordneter Vakuum-Anschlußelemente hat (mindestens drei) ist auch bei asymmetrischen Kieferverhältnissen oder bei nur teilbezahnten Gebissen eine vollständige Auffüllung des Abformraumes gewährleistet. Wird gegen Ende des Füllvorganges eines oder mehrere der Vakuum-Anschlußelemente durch Abformmaterial verschlossen, so findet weiterhin eine Unterdruckbeaufschlagung und ein Absaugen durch die Front des Abformmateriales verdrängter Flüssigkeiten durch die noch freien Anschlußelemente statt, so daß auch die letzte Phase des Füllens blasenfrei erfolgt.

Daß gemäß der Erfindung ein symmetrisches Abformmaterial-Verteilrohr vorgesehen ist, ist im Hinblick auf ein rasches und gleichförmiges Einfließen des Abformmateriales in den Abformraum von Vorteil.

Vorteilhafte Weiterbildungen der Erfindung sind in Unteransprüchen angegeben.

Wählt man das im Abformraum erzeugte Vakuum gemäß Anspruch 2, ist gewährleistet, daß sich die Zahnfleischsäume geringfügig von den Zähnen abheben, so daß die Zähne im Zahnfleischsaumbereich gut abgeformt werden.

Die Weiterbildung der Erfindung gemäß Anspruch 3 gestattet die Einstellung des im Abformraum erzeugten Unterdruckes gemäß den jeweils beim Patienten vorliegenden Verhältnissen. Insbesondere kann man den Unterdruck bei visueller Kontrolle des Zahnfleischsaumes unter Verwendung eines zumindest teilweise transparenten Löffels so einstellen, daß der Zahnfleischsaum gerade ein wenig abhebt.

Die Weiterbildung der Erfindung gemäß Anspruch 4 gestattet auf einfache Weise das Erzeugen eines Unterdrucks gewünschter Größe ausgehend von der an einem zahnärztlichen Arbeitsplatz sowieso zur Verfügung stehenden Druckluft.

Das Erzeugen des von der erfindungsgemäßen Vorrichtung benötigten Unterdruckes nach dem Venturi-Prinzip kann auch in Kombination mit einer am Arbeitsplatz vorhandenen Absaugung angewendet werden. Als Alternative kann auch die am Arbeitsplatz vorhandene Absaugung in Verbindung mit einem zusätzlichen Unterdruckregler in Betracht gezogen werden.

Verwendet man eine Vakuum-Verteilleitung, wie sie gemäß Anspruch 6 vorgeschlagen wird, in Verbindung mit einer Abformmaterial-Verteilleitung, so kann man auch Fließrichtungen des Abformmateriales von bukkal nach oral oder umgekehrt einrichten, wobei sich derartige Flußbilder besonders gut dann realisieren lassen, wenn jeder Zahnposition fluchtende Öffnungen in der Abformmaterial-Verteilleitung und der Vakuum-Verteilleitung zugeordnet sind.

Bei einer Vorrichtung gemäß Anspruch 7 werden die verschiedenen Vakuum-Anschlußelemente gleichermaßen mit Vakuum versorgt, was ebenfalls im Hinblick auf ein rasches und gleichförmiges Füllen des Abformraumes von Vorteil ist. In der Praxis ist der lichte Durchmesser der Vakuum-Anschlußelemente kleiner als der der gemeinsamen Unterdruckleitung. Wenn Abformmaterial in ein Anschlußelement hineingezogen wird, da der Löffel an dieser Stelle gefüllt ist, wird dieses Material nur ein Stück weit aspiriert, da es aufgrund seiner hohen Viskosität nur schlecht in dem engen Kanal des Anschlußelementes bewegbar ist. Damit wird das entsprechende Vakuum-Anschlußelement verschlossen. Das Abformmaterial kann aber nicht in die gemeinsame Unterdruckleitung hineinfließen, so daß die anderen Vakuum-Anschlußelemente über diese Leitung weiterhin mit Unterdruck beaufschlagt sind. Nach Verschluß eines Vakuumanschlußelementes wird das Fließbild des Abformmateriales geändert, und zwar so, daß das Abformmaterial den noch nicht gefüllten Abschnitten des Abformraumes zugeführt wird. Die Lage und Anzahl der Vakuum-Anschlußelemente kann man aus einem vereinfachten Modell der Kieferform ableiten, wonach die Seitenzahnreihen bis zum Eckzahn durch eine Gerade und die Frontzahnregion zwischen den beiden Eckzähnen als weitere Gerade angesehen werden. Die Knotenpunkte zur Absaugung liegen dann jeweils mesial der Eckzähne zwischen dem Eckzahn und dem seitlichen Schneidezahn auf den Schnittpunkten der Geraden und zusätzlich ist wenigstens ein Knotenpunkt symmetrisch zwischen den beiden mittleren Schneidezähnen vorgesehen.

Bei einer Vorrichtung gemäß Anspruch 8 entfällt eine aufwendige Reinigung der Anschlußelemente. Das wiederverwendete Teil des Löffels kann aus starrem oder weichem Material gefertigt sein. Vorzugsweise ist das als Wegwerfteil ausgebildete Löffelteil starr und so ausgebildet, daß es vom eingefüllten Abformmaterial weitgehend umschlossen wird. Durch diese Ausbildung wird erreicht, daß der aus den Löffelteilen zusammengesetzte Löffel insgesamt starr und verwindungssteif ist, zugleich das als Wegwerfteil ausgebildete Löffelteil zusammen mit den ausgehärteten Abformmaterial ein starres Teil bildet und ohne das wiederverwendete Löffelteil ins Labor verschickt werden kann. Die Verwendung eines weichen wiederverwendeten Löffelteiles ist dagegen im Hinblick auf die Abdichtung zwischen den Löffelteilen unter geringem Aufwand von Vorteil. Falls gewünscht, kann man auch nur Abschnitte des als Wegwerfteil ausgebildeten Löffelsegmentes, welche am Zahnfleisch anliegen, aus weichem elastischem Material herstellen.

Bei einem Löffel, wie er im Anspruch 9 angegeben ist, liegen die verschiedenen Anschlußelemente für Abformmaterial und Unterdruckbeaufschlagung in einem gemeinsamen vorderen Löffelbereich, was das Herstellen der Strömungsverbindungen vereinfacht.

Dabei kann man gemäß Anspruch 10 auch Anschlußelemente mit großem Durchflußquerschnitt in einem kleinen vorderen mittigen Bereich des Löffels vorsehen, wobei diese Anschlußelemente zu dem gegebenenfalls als Wegwerfteil ausgebildeten Löffelteil gehören.

Gemäß Anspruch 11 erhält man eine gute fluidische Abdichtung zwischen dem wiederverwendeten Löffelteil und dem Wegwerf-Löffelteil. Man kann daher das Untervakuumsetzen des Abformraumes unter Verwendung einer wenig leistungsfähigen Saugeinrichtung bewerkstelligen. Stattdessen oder zusätzlich kann man an den Stoßstellen zwischen den Löffelsegmenten auch zusätzliche Dichtmassen vorsehen, z.B. verformbare und/oder härtende Dichtmassen, z.B. Silikon einspritzen oder plastische oder plastisch oder elastisch verformbare und erhärtende Dichtmassen verwenden, z.B. Knetmasse, Silikone, Wachse, Kunststoffe oder dergleichen. Ferner kann man an den Stoßstellen zwischen den Löffelteilen schlauchähnliche Dichtelemente verwenden.

Die Weiterbildungen der Erfindung gemäß den Ansprüchen 12 bis 14 sind im Hinblick auf ein gutes, schonendes und mit geringem apparativem Aufwand verbundenes Abdichten des Abformraumes von Vorteil.

Bildet man das Wegwerf-Löffelteil gemäß Anspruch 15 aus, so läßt es sich gut als eine Einheit handhaben, z.B. auf das wiederverwendete Löffelteil aufsetzen, hat aber andererseits noch eine gewisse Flexibilität, um sich der Form des wiederverwendeten Löffelteiles anpassen zu können, so daß es in sicherem Reib- oder Schnappeingriff mit diesem steht. Durch die Stegbauweise des Wegwerf-Löffel teiles wird auch Material eingespart, was bei Wegwerf-Löffelteilen von besonderem Vorteil ist.

Mit der Weiterbildung der Erfindung gemäß Anspruch 16 wird eine präzise Positionierung des Abformmaterial-Verteilrohres im Löffel gewährleistet.

Die Weiterbildung der Erfindung gemäß Anspruch 17 gestattet es, zum einen das richtige Aufsetzen und Positionieren des Löffels visuell zu kontrollieren. Darüber hinaus kann man visuell kontrollieren, ob der für den jeweiligen Patienten richtige Unterdruck im Abformraum eingestellt ist (leichtes Abheben der Zahnfleischsäume). Schließlich kann man bei einem Löffel gemäß Anspruch 19 auch das Füllen des Abformraumes mit Abformmaterial visuell kontrollieren. Auch folgendes kann man gut visuell kontrollieren: Die Absaugung und die Entfernung von Therapeutika oder Flüssigkeiten, wie Blut oder Speichel aus dem Abformraum über die Vakuumanschlußelemente sowie das Verschlossenwerden der Vakuumanschlußelemente mit aspiriertem Abformmaterial.

Die Weiterbildung der Erfindung gemäß Anspruch 18 ist im Hinblick auf einen sicheren Sitz des Löffels im Mund des Patienten in allen Phasen des Abformvorganges von Vorteil.

Wählt man die Durchmesser der Anschlußelemente des Löffels gemäß Anspruch 19, so hat man eine gute Unterdruckbeaufschlagung des Abformraumes sowie ein gutes Zuführen von Abformmaterial ins Innere des Löffels.

Mit der Weiterbildung der Erfindung gemäß Anspruch 20 wird ein noch rascheres Füllen des Abformraumes bei weiterhin hoher Abdruckgenauigkeit gewährleistet.

Auch die Weiterbildung der Erfindung gemäß Anspruch 21 ist im Hinblick auf einen in allen Abschnitten gleichförmig gut paßgenauen Zahnabdruck von Vorteil.

Bei einer Vorrichtung gemäß Anspruch 22 kann man den Löffel auch dazu verwenden, den Abformraum vor dem Ausfüllen mit Abformmaterial oder in Behandlungssituationen, welche nicht im Zusammenhang mit Abformungen stehen, mit einem Spül- oder Behandlungsfluid durchzuspülen. Dieses Spülen kann sowohl mit flüssigen Medien als auch gasförmigen Medien erfolgen.

Gemäß Anspruch 23 kann man zusammen mit diesem Spülvorgang auch Wirkstoffe auf die Zahnoberflächen oder Gewebe einwirken lassen, z.B. Reinigungsmittel, Trennmittel oder blutstillende Mittel, sowie die anderen oben stehend unter 4. aufgeführten Behandlungsmittel.

Mit der Weiterbildung der Erfindung gemäß Anspruch 24 ist besonders gut gewährleistet, daß kein Abformmaterial in die Unterdruckquelle gelangt.

Ein Sperrelement für Abformmaterial, wie es im Anspruch 25 angegeben ist, läßt sich unter Verwendung von herkömmlichen Komponenten leicht als Wegwerfteil realisieren.

Mit der Weiterbildung der Erfindung gemäß Anspruch 26 ist gewährleistet, daß auch etwa in flüssigem Zustand das Sperrelement noch erreichendes Abformmaterial nicht zu der Unterdruckquelle hindurchgesaugt werden kann.

Bei einer Vorrichtung gemäß Anspruch 27 ist der Abformraum zunächst zum Positionieren des Löffels evakuierbar, ohne daß hierzu schon die Quelle für das flüssige härtbare Abformmaterial angeschlossen werden müßte. Dies erleichtert das Positionieren.

Gemäß Anspruch 28 erhält man den Verschluß für das Abformmaterial-Anschlußelement mit geringen Kosten, und sogleich ist ein einfacheres Öffnen des Abformmaterial-Anschlußelementes automatisch beim Anschließen der Quelle für das flüssige härtbare Abformmaterial gewährleistet.

Die Weiterbildungen der Erfindung gemäß den Ansprüchen 29 und 30 sind im Hinblick auf die Gestaltung des Strömungsmusters des Abformmateriales im Abformraum von Vorteil. Bevorzugt wird dieses Strömungsmuster so eingestellt, daß sich die Front des Abformmateriales bis zum Schluß des Füllvorganges gegen ein noch nicht abgedecktes Vakuum-Anschlußelement bewegt. Dies bedeutet bei der in der Praxis vorteilhaften Anordnung von Vakuumelementen im vorderen Bereich des Löffels ein Füllen der Form von hinten nach vorne.

Von der mit der Erfindung erhaltenen hohen Paßgenauigkeit von Abdrücken kann man mit Vorteil auch im Dentallabor beim Doublieren von Abdrücken oder von Teilen hiervon Gebrauch machen, wie im Anspruch 31 angegeben.

Nachstehend wird die Erfindung anhand von Ausführungsbeispielen unter Bezugnahme auf die Zeichnung näher erläutert. In dieser zeigen:
- Figur 1:: eine Aufsicht auf einen Löffel zum Herstellen eines Unterkiefer-Abdruckes;
- Figur 2:: einen tranversalen Schnitt durch den Löffel nach Figur 1 längs der dortigen Schnittlinie II-II in vergrößertem Maßstabe, welcher im Munde eines Patienten über den Unterkiefer-Zahnreihen reponiert ist.
- Figur 3:: eine Aufsicht auf die Unterseite eines Löffels zum Herstellen eines Oberkiefer-Abdruckes;
- Figur 4:: einen transversalen Schnitt durch den Löffel nach Figur 3 längs der dortigen Schnittlinie IV-IV;
- Figur 5:: eine Frontansicht des Löffels nach den Figuren 3 und 4;
- Figur 6:: einen Schnitt durch den Nasen-Mund-Rachenbereich des Kopfes eines Patienten, anhand dessen die Anwendung eines Löffels nach den Figuren 3 bis 5 erläutert wird;
- Figur 7:: eine Aufsicht auf die Unterseite des Löffels nach den Figuren 3 bis 5 unter Arbeitsbedingungen;
- Figur 8:: einen in der Längsmittelebene genommen Schnitt durch einen abgewandelten Löffel;
- Figur 9:: eine Aufsicht auf die Oberseite des Löffels nach Figur 8 sowie eine schematische Darstellung von dem Löffel zum Herstellen eines Abdruckes zugeordneten Versorgungseinrichtungen;
- Figur 10:: eine Frontansicht des Löffels nach den Figuren 8 und 9;
- Figur 11:: eine Aufsicht auf die Rückseite des Löffels nach den Figuren 8 bis 10;
- Figur 12:: einen longitudinalen Schnitt durch einen weiter abgewandelten Löffel zum Herstellen eines Oberkiefer-Abdruckes;
- Figur 13:: eine Aufsicht auf die Oberseite des Löffels nach Figur 12;
- Figur 14:: einen vergrößerten Teilschnitt durch einen Randbereich eines Löffels, in welchem Einzelheiten einer Dichtleistenanbringung wiedergegeben sind;
- Figur 15:: eine ähnliche Ansicht wie Figur 14, in welcher eine abgewandelte Dichtleistenanordnung gezeigt ist;
- Figur 16:: einen schematischen Teilschnitt durch einen weiter abgewandelten Löffel, welcher in Verbindung mit vor Einbringen in den Löffel erwärmten und durch Abkühlung härtenden Abformmaterialien verwendet wird;
- Figur 17:: eine ähnliche Ansicht wie Figur 9, in welcher ein weiter abgewandelter Löffel dargestellt ist; und
- Figur 18:: einen transversalen Teilschnitt durch einen weiter abgewandelten Löffel.

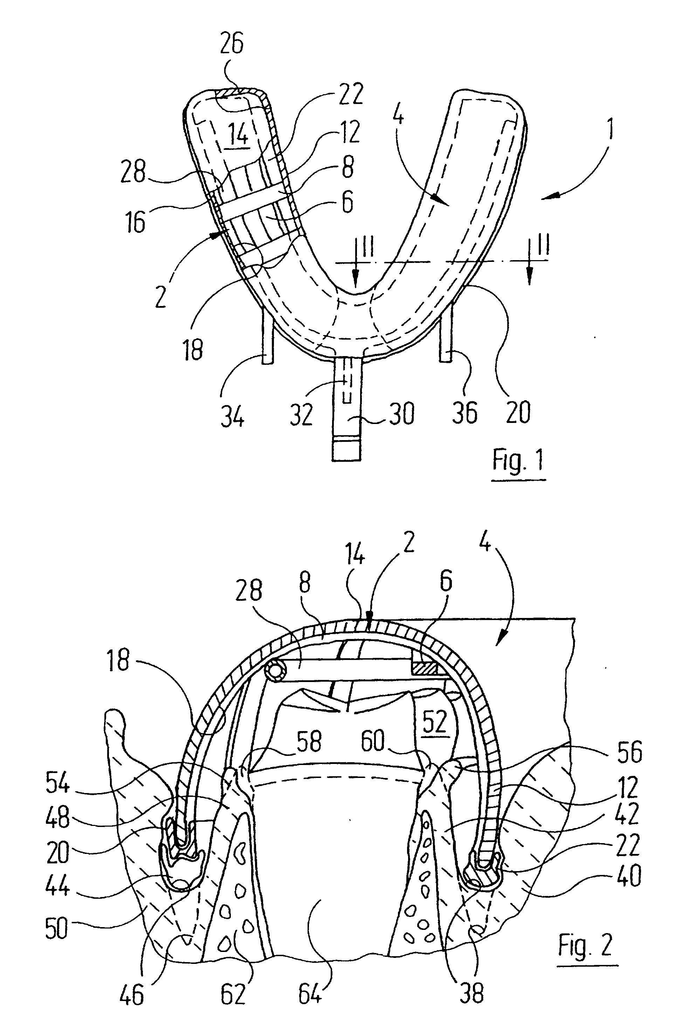

In Figuren 1 und 2 trägt ein Löffel zum Herstellen eines Abdruckes der Unterkiefer-Zahnreihe eines Patienten insgesamt das Bezugszeichen 1. Der Löffel hat in Aufsicht gesehen die Form einer Parabel oder vereinfacht eines V oder U, dessen Schenkel einen Winkel von etwa 50° miteinander einschließen und leicht gekrümmt sind, wie aus der Zeichnung ersichtlich. Auf diese Weise ist der Löffel grob der Kontur eines Unterkiefers angepaßt.

Ein Oberkiefer-Löffel hat dagegen etwa elliptische Form.

Die Größe des Löffels richtet sich nach epidemiologischen Daten und Häufigkeitsverteilungen unterschiedlicher Kiefergrößen. Für die Praxis kann es ausreichen, drei unterschiedliche Standard-Löffelgrößen jeweils für Oberkiefer und Unterkiefer vorzusehen.

Der Löffel 1 besteht aus einem starren käfigähnlichen Skelett 2 und einem über diesem liegenden transparenenten Überwurfteil 4, vorzugsweise einem Kunststoff-Einwegartikel. Das Skelett 2 umfaßt eine in Aufsicht gesehen U-förmig gebogene Schiene 6, an welcher transversale Spanten 8 befestigt sind.

In transversaler Schnittansicht gesehen hat das Überwurfteil 4 im wesentlichen U-förmige Gestalt. Eine innenliegende Randwand 12 ist über eine bogenförmige Basiswand 14 mit einer außenliegendes Randwand 16 verbunden. Diese Wände begrenzen zusammen eine Abformrinne 18.

Auf die freien, unter Arbeitsbedingungen untenliegenden Enden der Spanten 8 sind zugleich Längsspanten des Skelettes 2 bildende Dichtleisten 20, 22 fest aufgesetzt. Diese erstrecken sich bis zu transversalen Stirnwänden 26 an den Enden der Schenkel des Löffels 1.

Die Dichtleisten 20, 22 können zumindest in Abschnitten aus weichem Material gefertigt sein.

Längs der äußeren Randwand 16 verläuft ein U-förmiges Verteilrohr 28. Dieses hat einen mittleren als T-Stück ausgebildeten und von der Randwand 16 getragenen Abschnitt. Letzterer kommuniziert mit einem Anschlußstutzen 30, der unter Betriebsbedingungen mit einer Quelle für flüssiges Abformmaterial verbunden ist.

In Figur 1 unter dem Anschlußstutzen 30 liegend ist ein Anschlußstutzen 32 vorgesehen, der mit einer Unterdruckquelle verbunden wird. Symmetrisch zu beiden Seiten der Längsmittelebene des Löffels 1 sind zwei weitere Vakuum-Anschlußstutzen 34, 36 vorgesehen. Letztere liegen jeweils mesial der Eckzähne zwischen den Eckzahn und dem seitlichen Schneidezahn.

Figur 2 zeigt einen oben beschriebenen Löffel unter Arbeitsbedingungen an einem Patienten. Die innenliegende-Dichtleiste 22 sitzt in einer Umschlagfalte 38, die zwischen der Zunge 40 und dem zungenseitigen Zahnfleisch 42 liegt.

Die außenliegende Dichtleiste 20 stützt sich bei der hier betrachteten Anwendung über einen plastischen Dichtkörper 44 am Boden einer bukkalen Umschlagfalte 46 ab, die zwischen dem bukkalen Zahnfleisch 48 und dem Wangengewebe 50 liegt. Der Dichtkörper 44 kann z.B. ein Wachsdraht, ein Schlauch, eine geformte Silikonmasse, weichbleibender Kunststoff, ein Wattepfropfen, ein plastisch verarbeiteter, unter Anwendungsbedingungen intraoral am in situ befindlichen Löffel ausgeformter und thermo- oder duroplastisch erhärtender Kunststoff (Herstellung eines individualisierten Löffels) oder dergleichen sein.

Die Stirnwände 26 oder ggf. unter ihnen vorgesehene dem Dichtkörper 44 enstprechende Dichtkörper arbeiten mit den hinter der Zahnreihe liegenden mit Weichgewebe bedeckten Kieferabschnitten dicht zusammen. Auf diese Weise begrenzt der Löffel 1 insgesamt zusammen mit den der Zahnreihe benachbarten Geweben einen strömungsmitteldichten Abformraum 52.

Unter Arbeitsbedingungen ist der Abformraum 52 über die Anschlußstutzen 32 bis 36 mit einer Unterdruckquelle verbunden. Durch die Unterdruckbeaufschlagung werden die weichen Gewebe aus ihrem in Figur 2 gestrichelt angedeuteten Normalzustand in den durch ausgezogene Linien wiedergegebenen Zustand gebracht. In diesem sind die dem Zahnhals benachbarten Ränder 54, 56 des Parodonts vom Zahnhals abgehoben, so daß dieser über Spalte 58, 60 zum Abformraum 52 hin offen ist.

Bei 62 ist der knöcherne Alveolarfortsatz angedeutet. Bei 64 ist ein präparierter Unterkiefer-Molar gezeigt.

Verbindet man unter den in Figur 2 gezeigten Bedingungen den Anschlußstutzen 30 mit einer Quelle für flüssiges Abformmaterial mit verglichen mit Wasser hoher Viskosität ("dünnflüssiges" Abformmaterial), so fließt dieses in erster Linie unter dem durch die Abformmaterialquelle vorgegebenen Einspeisedruck, aber auch unterstützt durch den in Abformraum herrschenden Unterdruck in den Abformraum 52 eingeschlossen die Spalte 58, 60 und füllt diesen vollständig aus, wobei die Front des flüssigen Abformmateriales im Abformraum 52 angefundene Flüssigkeiten (Wasser, Speichel, Blut) vor sich herschiebt, so daß diese Flüssigkeiten zu keinen Blasen im Abdruck führen können. Die Flüssigkeiten werden über die Anschlußstutzen 32 bis 36 abgesaugt.

Nach dem Aushärten des Abformmateriales erhält man einen sehr präzisen und paßgenauen Abdruck der Unterkieferzahnreihe, insbesondere auch im Bereich der Zahnfleischsäume.

Der Löffel 1 ist ein starres zumindest teilweise (überwurfteil 4 oder Teil hiervon) aus transparentem Material hergestelltes Teil. Auf dieseweise kann man das Fortschreiten des Füllens des Abformraumes 52 mit einem Abformmaterial, welches vorzugsweise gefärbt ist, visuell gut verfolgen.

Einzelheiten der bevorzugten Arbeitsbedingungen zur Herstellung eines Abdruckes und hierzu verwendbarer Abformmaterialien werden weiter unten noch genauer beschrieben.

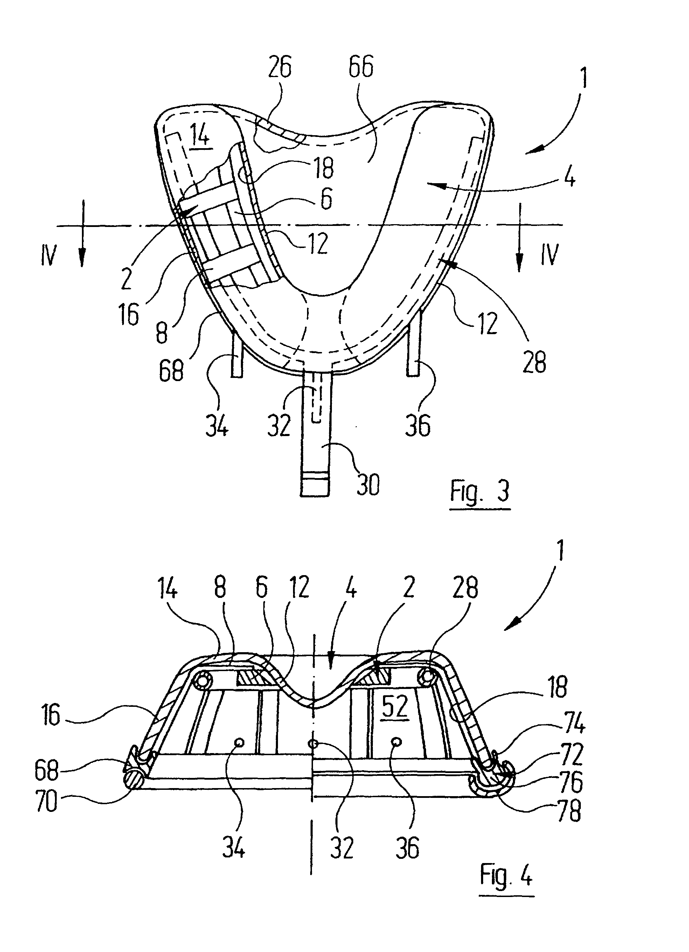

In den Figuren 3 und 4 ist ein ähnlich aufgebauter Löffel 1 dargestellt, der jedoch zum Herstellen eines Abdruckes eines Oberkiefers verwendet wird. Von der Funktion her vergleichbare Teile sind wieder mit denselben Bezugszeichen versehen. Der Löffel 1 nach den Figuren 3 und 4 unterscheidet sich in erster Linie von demjenigen nach den Figuren 1 und 2 dadurch, daß er zusätzlich eine mittige Wand 66 aufweist, welche der Kontur des Gaumensegels nachgebildet ist, und zwar derart, daß sie von letzterem einen mittleren Abstand von 1 bis 2 cm aufweist. Darüber hinaus unterscheidet sich der Löffel 1 nach den Figuren 3 und 4 von demjenigen nach Figuren 1 und 2 durch seine abgewandelte Querschnittsform, wie aus der Zeichnung ersichtlich.

Bei den freien Rändern des Löffels 1 sind in Figur 4 rechts und links der Mittellinie zwei verschiedene Dichtungsanordnungen wiedergegeben. Im linken Abschnitt von Figur 4 ist eine im wesentlichen H-förmigen Querschnitt aufweisende mit den transversalen Spanten zu einem Skelett verbundene Dichtleiste 68 gezeigt, die zwischen ihren oberen Armen den freien Rand der Randwand 16 aufnimmt, während ihre unteren Arme ein verformbares zylindrisches Dichtelement 70 aufnehmen.

In der rechten Hälfte von Figur 4 ist auf den freien Rand der Randwand 16 eine ebenfalls mit den transversalen Spanten zu einem Skelett verbundene Dichtleiste 72 aufgesetzt, welche mit Armen 74 die Randwand zwischen sich aufnimmt und einen kreisförmigen Querschnitt aufweisenden Kopfabschnitt 76 hat, auf welchem ein C-förmigen Querschnitt aufweisendes Dichtelement 78 angeordnet ist.

Ein solcher mehrlagiger Aufbau der Dichtstellen zwischen Löffel und Gewebe kann im Hinblick auf ein Ausgleichen größerer geometrischer Unterschiede vorteilhaft sein, wozu die äußeren Dichtelemente 70 bzw. 78 vom Arzt nach Bedarf verwendet werden, wobei auch mehrere Dichtelemente 78 übereinander verwendet werden können.

Bei den in Figuren 1 bis 5 gezeigten Löffeln kann man das Überwurfteil 4 auch aus schwächerem Material herstellen, da man ja die starre fachwerkähnliche Tragstruktur in Form der belastungsfähigen Schienen 6 und der Spanten 8 sowie der mit diesen verbundenen Dichtleisten 20, 22 bzw. 68, 72 hat, welche sich in Längsrichtung der Abformrinne 18 erstrecken und beim Abformen des Kiefers in das Abformmaterial fest ganz oder teilweise eingebettet werden. Sind die Dichtleisten aus weichem Material gefertigt, so tragen sie nicht zur Steifigkeit des Löffels bei. Auch in diesem Falle ist aber gewährleistet, daß das ausgehärtete Abformmaterial zusammen mit in es eingebetteten Löffelabschnitten eine stabile steife Struktur darstellt.

In diesem Falle kann man dann den Löffel selbst statt aus Glas auch aus Kunststoff oder als Folienformteil (z.B. vakuumverformte Polyproyplenfolie) herstellen. Verzichtet man auf den Vorteil eines visuellen Kontaktes zum Inneren des Abformraumes, kann man den Löffel auch aus Metall herstellen.

In Abwandlung der oben beschriebenen Ausführungsbeispiele kann man den Löffel auch als einstückiges Wegwerfteil ausbilden oder aus mehr als zwei Löffelteilen zusammensetzen. Zwei- oder mehrteilige Abformlöffel haben dabei den Vorteil, daß man eines der Löffelteile als generell verwendbares Standardteil auslegt, während man in andere der Löffelteile eine Feinanpassung der Größe an den Kiefer des jeweiligen Patienten legen kann. Dabei erfolgt diese Anpassung vorzugsweise in einem als Wegwerfteil ausgebildeten Löffelteil.

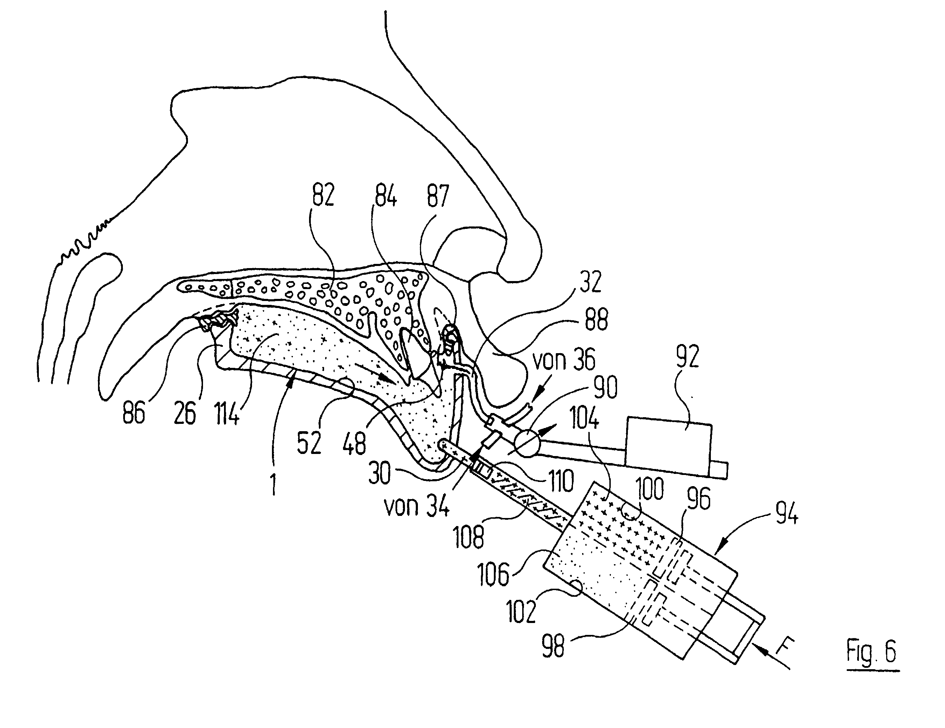

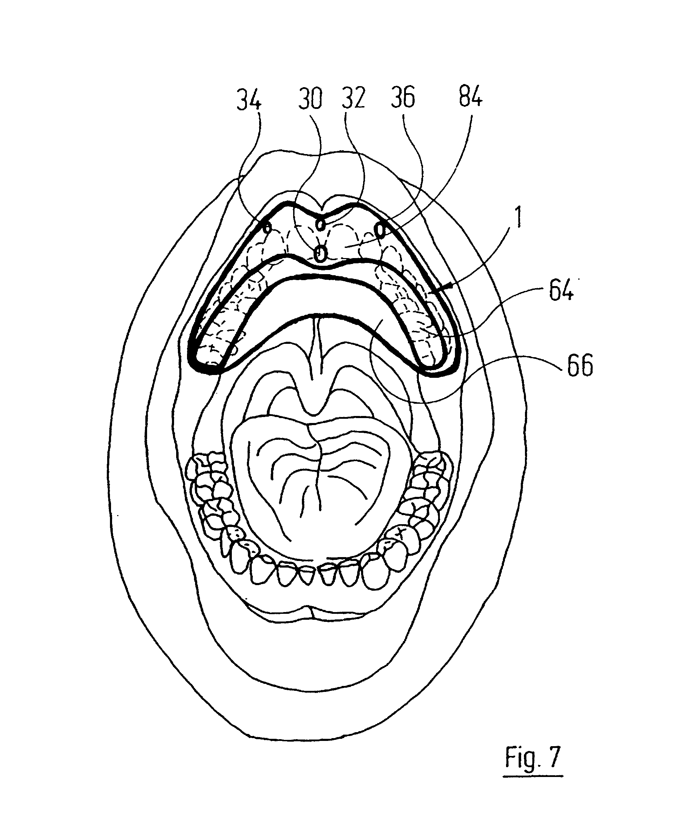

Die Figuren 6 und 7 zeigen den Löffel nach den Figuren 3 bis 5 unter Einsatzbedingungen.

Im Sagittalschnitt nach Figur 6 ist bei 82 der harte Gaumen eines Patienten gezeigt. Mit 84 ist ein präparierter Schneidezahn gekennzeichnet.

Unter dem freien Rand der hinteren Stirnwand 26 des Löffels 1 ist eine plastisch verformbare Dichtmasse 86 wiedergegeben, der vordere Abschnitt der Randwand 16 sitzt (ggf. wieder unter Zwischenschaltung eines Dichtkörpers 87) in demjenigen Bereich der Umschlagfalte 38, welcher sich zwischen der Oberlippe 88 und dem außenliegenden labialen Zahnfleisch 48 befindet.

Die drei Vakuum-Anschlußstutzen 32, 34, 36 sind über eine gemeinsame Vakuumleitung 89 und einen Unterdruckregler 90 mit der Saugseite einer Saugeinrichtung 92 verbunden. Der Abformmaterial-Anschlußstutzen 30 ist mit dem Auslaß einer Tandemspritze 94 verbunden, deren Stempel 96, 98 wahlweise getrennt oder zusammen verlagerbar sind. Die beiden Zylinder 100, 102 der Tandemspritze enthalten einen flüssigen Binder 104 bzw. einen flüssigen, mit Katalysator versetzten Härter 106. Die beiden Zylinder 100, 102 stehen mit einem Mischer 108 in Verbindung, der z.B. ein Mischrohr mit darin angeordneten Mischwendeln aufweisen kann. Beim Einlaß des Anschlußstutzens 30 ist ein Ventil 110 dargestellt, welches bei nicht angesetzter Tandemspritze 94 verschlossen ist, so daß unter diesen Bedingungen im Abformraum 52 ein Vakuum erzeugt werden kann, um den Löffel 1 sicher auf dem Oberkiefer zu positionieren.

Mit dem Aufsetzen der Tandemspritze 94 wird das Ventil 11 dann zwangsweise geöffnet. In Abwandlung kann man an dem Abformmaterial-Anschlußstutzen 30 eine angeformte Membran vorsehen, welche beim Aufsetzen der Tandemspritze 94 perforiert wird.

Ebenfalls in Abwandlung kann man anstelle einer Tandemspritze 94 mit angesetztem Mischrohr eine separate Mischvorrichtung verwenden und gemischtes Material in eine Einfachspritze einfüllen, die dann an den Abformmaterial-Anschlußstutzen 30 angesetzt wird.

Figur 6 zeigt eine fortgeschrittene Phase des Einfüllens von Abformmaterial. Dieses wird über die im Inneren des Löffels 1 verlaufende U-förmige Verteilleitung 28 zu den hinteren Enden der Schenkel der Abformrinne 18 gefördert. Durch die auf die Stempel 96, 98 ausgeübte Kraft wird das Abformmaterial zwangsweise in den Abformraum 52 eingebracht und zunehmend nach vorne gedrückt.

Beim Füllen des Abformraumes 52 von hinten nach vorne schiebt die Stirnfläche des flüssigen Abformmateriales Speichel- oder Blutreste vor sich her zu den Vakuumanschlußstutzen 32, 34, 36. Das zunehmende Ausfüllen des Abformraumes 52 durch das vom Mischer 108 abgegebene Abformmaterial 114 kann visuell kontrolliert werden, wenn das Überwurfteil 4 aus transparentem Material hergestellt worden ist. Insbesondere kann visuell kontrolliert werden, wann Abformmaterial in die transparenten Vakuum-Anschlußstutzen 32, 34, 36 eintritt. Sind diese alle drei mit Abformmaterial gefüllt, kann das Bewegen der Stempel 96, 98 beendet werden.

Die Aushärtecharakteristik des Abformmateriales 114 ist über die Wahl des Härters 106 und des in diesem und/ oder dem Binder enthaltenen Katalysators bzw. Inhibitors so gewählt, daß das Abformmaterial bis zum vollständigen Ausfüllen des Abformraumes 52 noch gut flüssig ist. Nach Aushärten des Abformmateriales und Lösen der Verbindungen an den Anschlußstutzen 30 bis 36 kann dann der Löffel 1 in bekannter Weise vom Oberkiefer abgenommen werden, wobei die Anschlußstutzen 30 bis 36 zugleich als Griff dienen können.

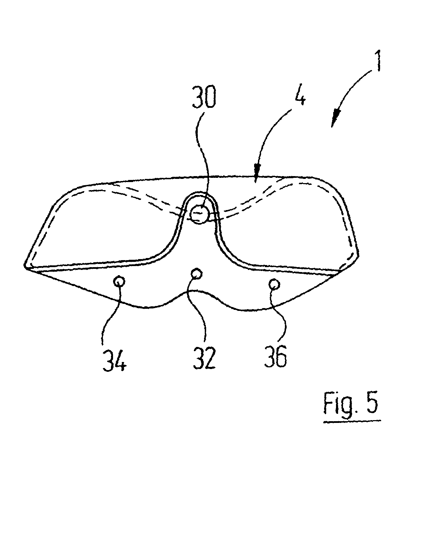

Wie insbesondere aus den Figuren 5, 6 und 7 ersichtlich, liegen die Vakuum-Anschlußstutzen 32, 34, 36 gleichermaßen auf Höhe oder apikal der Zahnhälse im Bereich der Umschlagfalte. Die beiden seitlichen Anschlußstutzen liegen in tangentialer Verlängerung zu den Seitenzahnreihen, der mittlere Anschlußstutzen liegt zwischen den beiden mittleren Schneidezähnen. Durch diese Anordnung ist gewährleistet, daß der Löffel auch bei asymmetrischem Zahnbogen zuverlässig gefüllt wird.

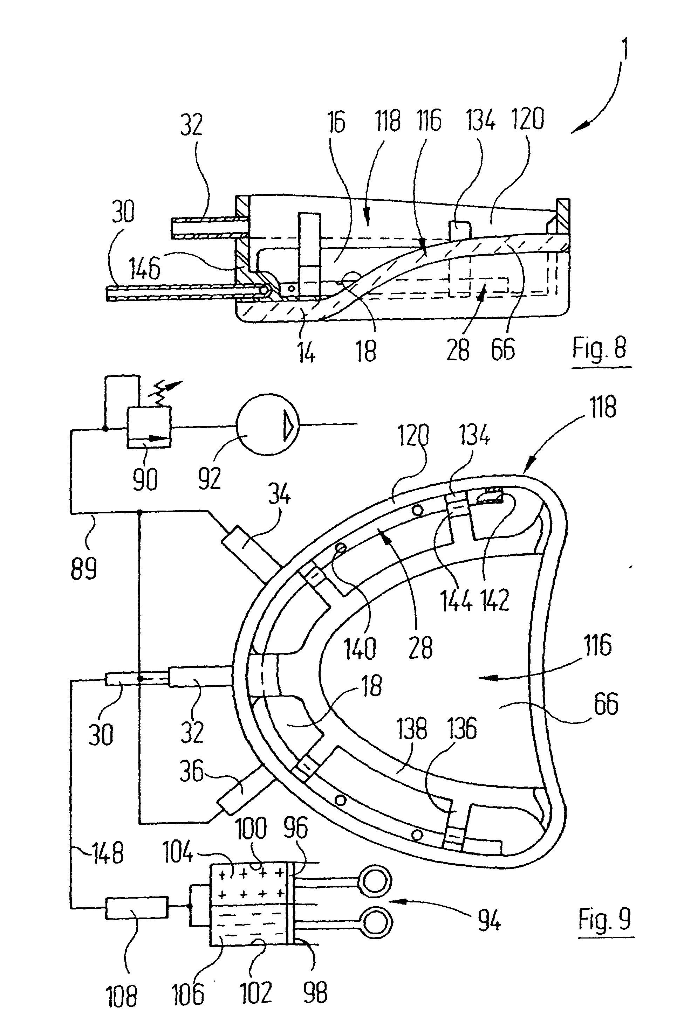

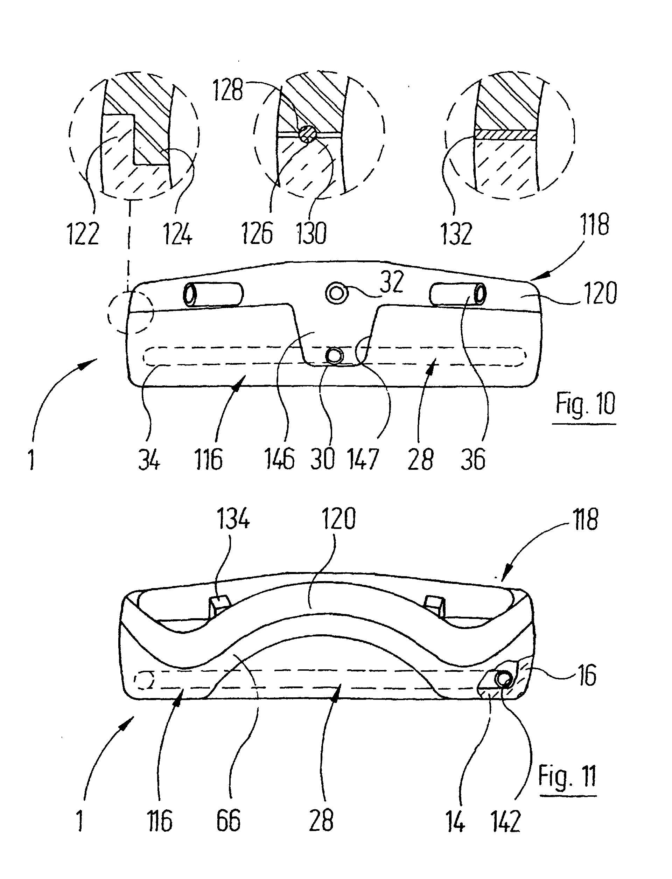

Bei dem abgewandelten Löffel nach den Figuren 8 bis 11 ist ein Löffelgrundteil 116 vorgesehen, welches als starrer Glaskörper oder starrer transparenter Kunststoffkörper ausgebildet ist. Das Löffelgrundteil entspricht in seiner Grundgeometrie im wesentlichen dem Löffel 1 nach den Figuren 3 bis 5, nur ist seine außenliegende Randwand 16 etwas niedriger. Auf das Löffelgrundteil 116 ist ein insgesamt mit 118 bezeichnetes Löffelrandteil aufgesetzt. Dieses hat eine außenliegende Randwand 120, die eine stetige Fortsetzung der Randwand 16 des Löffelgrundteiles 116 darstellt. Wie aus Figur 10 ersichtlich, kann man eine Dichtstelle zwischen den Randwänden 16 und 120 dadurch herstellen, daß man am oberen Ende der Randwand 16 eine nach oben vorstehende außenliegende Feder 122 anformt, während die Randwand 120 eine innenliegende nach unten hängende Feder 124 aufweist, die mit der Feder 122 nach Art einer Feder-/ Nut-Verbindung zusammenarbeitet.

Als Alternative kann man, wie ebenfalls in Figur 10 dargestellt, in den Stirnflächen der Randwände 16 und 120 fluchtende Nuten 126, 128 vorsehen, in welchen jeweils ein Abschnitt einer Dichtung 130 einsitzt.

Nochmals wahlweise kann man die beiden Stirnflächen der Randwände 16 und 18 auch durch eine plastische Dichtoder Klebemasse 132 verbinden.

Es versteht sich, daß die vorgenannten Alternativen zur Herstellung einer dichten Verbindung zwischen den Randwänden 16 und 120 auch untereinander kombiniert werden können.

Von der Randwand 120 des Löffelrandteiles 118 hängen verschiedene vertikale Stege 134 nach unten. Diese sind mit radial verlaufenden Querstegen 136 verbunden, deren radial innenliegende Enden eine inneren Längssteg 138 tragen. Damit bilden die Randwand 120 und die Stege 134, 136 und 138 insgesamt eine käfigähnliche Struktur, durch welche das Löffelrandteil 118 versteift wird.

Beim hier betrachteten Ausführungsbeispiel ist das zu den hinteren Enden der Abformrinne 18 führende U-förmige Verteilrohr 28 in seinen beiden Schenkeln jeweils mit zwei im mittleren Schenkelabschnitt liegenden nicht direkt auf die Zahnreihe gerichteten, gegebenenfalls auch von der Zahnreihe wegweisenden Austrittsöffnungen 140 versehen. Aufgrund dieser Ausbildung des Verteilrohres 28 wird auch schon zu Beginn der Füllphase dem vorderen Abschnitt des Abformraumes 52 flüssiges Abformmaterial zugeführt.

Die Größe der in der Wand des Verteilrohres 28 vorgesehenen Austrittsöffnungen 140 und die Größe des offenen hinteren Endes 142 des Verteilrohres 28 sind aber unter Berücksichtigung der Viskosität des flüssigen Abformmateriales so gewählt, daß weiterhin das Füllen des Abformraumes in erster Linie von hinten nach vorne, also in Richtung auf die Vakuum-Anschlußstutzen 32, 34, 36 zu erfolgt.

Wie aus der Zeichnung ersichtlich, ist das Verteilrohr 28 in verdickte Fußabschnitte 144 eingebettet, welche bei den unteren Enden der vertikalen Stege 134 liegen.

Das Löffelrandteil 118 ist vorzugsweise aus transparentem Kunststoffmaterial hergestellt, so daß man, wie oben stehend unter Bezugnahme auf die Figuren 1 bis 7 schon beschrieben, das Abheben der Zahnfleischsäume von den Zahnhälsen durch geeignet große Unterdruckbeaufschlagung und das Füllen des Abformraumes 52 visuell verfolgen kann. Auch die Vakuum-Anschlußstutzen 32 bis 36 sind wieder aus transparentem Kunststoffmaterial hergestellt, vorzugsweise an das Löffelrandteil 118 angeformt.

Alternativ kann man die Vakuum-Anschlußstutzen 32 bis 36 auch nur teilweise transparent ausbilden oder über transparente Verbindungsstücke an die gemeinsame Vakuumleitung 89 anschließen.

Wie aus Figur 10 ersichtlich, hat das Löffelrandteil in seinem mittleren, vorderen Abschnitt eine herabhängende Schürze 146, in welche der mit dem Verteilrohr 28 in Verbindung stehende Abformmaterial-Anschlußstutzen 30 eingespritzt ist und welche in einer Ausnehmung 147 der Randwand 16 einsitzt. Auf diese Weise befinden sich alle Strömungsmittelanschlüsse und alle Strömungsmittel verteilenden Kanäle am Löffelrandteil 118 und bilden zusammen mit diesem ein kostengünstiges Wegwerfteil. Der starre, verwindungsfreie Abschnitt des Löffels, nämlich das aus z.B. Glas oder transparentem Kunststoff gefertigte Löffelgrundteil 116 ist dagegen von schwierig zu reinigenden Elementen frei. Das Löffelgrundteil 116 läßt sich somit nach Sterilisierung wieder verwenden.

In weiterer Fortbildung der Erfindung kann man die verschiedenen Anschlußstutzen in einem gemeinsamen Steckverbinder (ggf. mehrteilig) zusammenfassen.

In Abwandlung des oben beschriebenen Ausführungsbeispieles kann man das Verteilerrohr 28 auch durch eine an das Löffelrandteil 118 angeformte, C-förmigen Querschnitt aufweisende nach unten offene Verteilrinne ersetzen, welche zusammen mit dem Boden der Abformrinne 18 einen Verteilkanal begrenzt.

Der oben stehend unter Bezugnahme auf die Figuren 8 bis 11 beschriebene Löffel wird wie folgt eingesetzt:

Zunächst wird ein desinfiziertes bzw. sterilisiertes Löffelgrundteil 116 mit einem Wegwerf-Löffelrandteil 118 ggf. unter Verwendung einer Dichtmasse zu einem Löffel 1 zusammengesetzt, wie er in den Figuren 8 bis 11 dargestellt ist. Dieser Löffel wird unter visueller Kontrolle auf den Oberkiefer des Patienten aufgesetzt. Ist die richtige Lage erreicht, wird der Unterdruckregler 90 auf einen Wert grob eingestellt, bei welchem der Löffel sich unverrückbar an den den Oberkiefer-Zahnbogen umgebenden Weichgeweben festsaugt. Unter weiterer visueller Kontrolle wird dann der Unterdruck so stark erhöht, daß sich die Zahnfleischsäume von den Zahnhälsen geringfügig abheben wie oben stehend unter Bezugnahme auf die Figuren 1 bis 7 schon erläutert wurde. Der Unterdruckregler 90 hält dann diese Druckabsenkung aufrecht, welche in der Regel zwischen 10 und 500 mbar, vorzugsweise zwischen 10 und 200 mbar, besonders bevorzugt zwischen 50 und 150 mbar beträgt.

Nun wird durch Aufstecken der vom Mischer 108 herkommenden Abformmaterial-Speiseleitung 148 auf den Anschlußstutzen 30 das Ventil 11 zwangsweise geöffnet, und unter dem und dem auf die Stempel 96, 98 ausgeübten Druck und unter Mitwirkung des im Abformraum 52 herrschenden Unterdrucks strömt das flüssige Abformmaterial durch das Verteilrohr 28 und tritt durch dessen offene hintere Enden 142 und falls vorhanden die Austrittsöffnungen 140 aus. Der Abformraum 52 füllt sich wieder von hinten nach vorne mit Abformmaterial, welches Speichel und Blut vor sich her zu den Anschlußstutzen 32, 34, 36 schiebt. Hat das flüssige Abformmaterial alle drei Anschlußstutzen 32, 34, 36 erreicht, so kann die auf die Stempel 96, 98 ausgeübte Kraft beendet werden. Die Speiseleitung 148 wird vom Anschlußstutzen 30 abgenommen, wodurch sich das in diesen integrierte Ventil 11 wieder schließt.

Nach Aushärten des Abformmateriales wird dann der Unterdruckregler 90 wieder auf die sperrende Ausgangsstellung zurückgestellt, und man kann nun den Löffel 1 vom Oberkiefer-Zahnbogen abheben.

Falls gewünscht, kann man die Unterdruckbeaufschlagung des Löffels auch schon nach dem vollständigen Ausfüllen des Abformraumes 52 beenden.

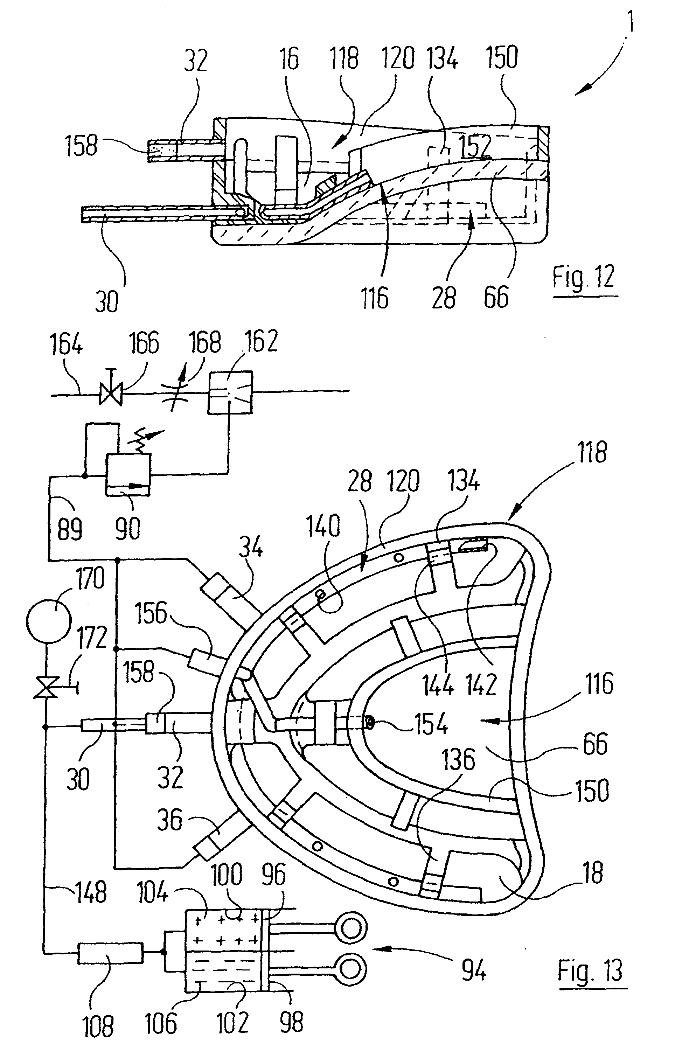

Das Ausführungsbeispiel nach den Figuren 12 und 13 der Zeichnung unterscheidet sich vom soeben beschriebenen Ausführungsbeispiel dadurch, daß die mittlere unter Abstand parallel zum Gaumensegel verlaufende Wand 66 des Löffels 1 eine zusätzliche Dichtwand 150 trägt, deren freier Rand dicht an das Gaumsegel anlegbar ist. Der unter Einsatzbedingungen durch die Dichtwand 150 und das Gaumensegel begrenzte Saugraum 152 steht über eine gesonderte Saugleitung 154 mit dem Unterdruckregler 90 in Verbindung. Auf diese Weise ist gewährleistet, daß der Löffel 1 auch dann noch unter starker Saugwirkung gegen den Oberkiefer des Patienten gedrückt wird, wenn der Abformraum 52 schon vollständig mit Abformmaterial ausgefüllt wurde, oder auch dann, wenn durch den Abformraum 52 flüssige, aerosolartige oder gasförmige Spülmedien oder Therapeutika geschickt werden.

Bei den Ausführungsbeispiel nach den Figuren 12 und 13 sind ferner an den Anschlußstutzen 32, 34, 36 zylindrische Filterelemente 156, 158, 160 angebracht, welche durch in sie etwa angesaugtes flüssiges Abformmaterial verstopft werden. Zur weiteren Verbesserung der Sperrwirkung können die eigentlichen Filterflächen der Filterelemente mit zusätzlichem Härter- oder Katalysatormaterial oder mit Inhibitorantagonisten versehen sein.

Ferner ist beim Ausführungsbeispiel nach den Figuren 12 und 13 anstelle einer Saugmaschine (Verdichter) eine Venturi-Düse 162 vorgesehen. Deren Unterdruckanschluß ist mit dem Unterdruckregler 90 verbunden, ihr Speiseeingang steht mit einer Druckluftleitung 164 über ein Schaltventil 166 sowie eine Drossel 168 in Verbindung. Auf diese Weise kann man den zum Betreiben des Löffels 1 notwendigen Unterdruck am Arbeitsplatz unter Verwendung von dort schon sowieso vorhandener Druckluft erzeugen und einstellen.

Schließlich gehört zu den in Figur 13 gezeigten Löffelversorgungseinheiten noch eine Spülfluidquelle 170, die über ein Schaltventil 172 mit der Speiseleitung 148 verbunden ist. Auf diese Weise kann bei noch nicht freigegebenen Stempeln 96, 98 der Speiseleitung 148 ein Spülfluid zugegeben werden, welches nach Aufsetzen und Festsaugen des Löffels 1 durch die Abformrinne 18 in die Anschlußstutzen 32, 34, 36 gesaugt wird. Das Spülfluid reinigt dabei den Zahnbogen und kann für den Abdruck schädliche Verunreinigungen so fernen. Bei dem Spülfluid kann es sich um eine Spülflüssigkeit oder um ein Spülgas oder um ein Aerosol handeln. In sämtlichen Fällen kann das Spülfluid Wirkstoffe umfassen, welche die Zahnoberflächen und/oder das Zahnfleisch im Hinblick auf ein günstiges späteres Abformen vorteilhaft beeinflussen. So kann z.B. das Spülfluid blutungsstillende oder die Speichelbildung bzw. den Speichelfluß herabsetzende Wirkstoffe enthalten.

Es versteht sich, daß bei einer praktischen Ausführungsform mehrere Spülfluidquellen vorgesehen sein können, die jeweils über ein zugeordnetes Schaltventil mit der Speiseleitung 148 verbunden sind, analog wie für die Spülfluidquelle 170 oben beschrieben. Diese Spülfluidquellen können unterschiedliche Behandlungsmaterialien oder Kombinationen derselben enthalten, wie sie in der Beschreibungseinleitung unter 4. aufgeführt sind. Insbesondere kann ein derartiges Spülfluid ein Netzmittel enthalten, das vor Abdrucknahme Anwendung findet.

Anstelle einer Spülfluidquelle kann man an die Speiseleitung 148 auch eine Warmluftquelle anschließen, um die Zahnoberflächen und Gewebeoberflächen zu trocknen, wobei die Lufttemperatur beispielsweise zwischen 37 und 50°C liegen kann.

Es versteht sich, daß bei einer anderen praktischen Ausführungsform auch ausschließlich Spülfluidquellen an den Abformlöffel angeschlossen sein können und keine Abformmaterial-Speiseleitungen oder Abformmaterial-Speiseeinrichtungen verwendet werden. Auch kann der Abformlöffel ohne Zusammenhang mit einer Abformung in Behandlungssituationen zur Darreichung von Therapeutika verwendet werden, wie sie in der Beschreibungseinleitung im Punkt 4. angesprochen sind.

Nach Beendigung der Spülphase wird der in den Figuren 12 und 13 gezeigte Löffel ähnlich verwendet, wie oben stehend unter Bezugnahme auf die Figuren 8 bis 11 beschrieben.

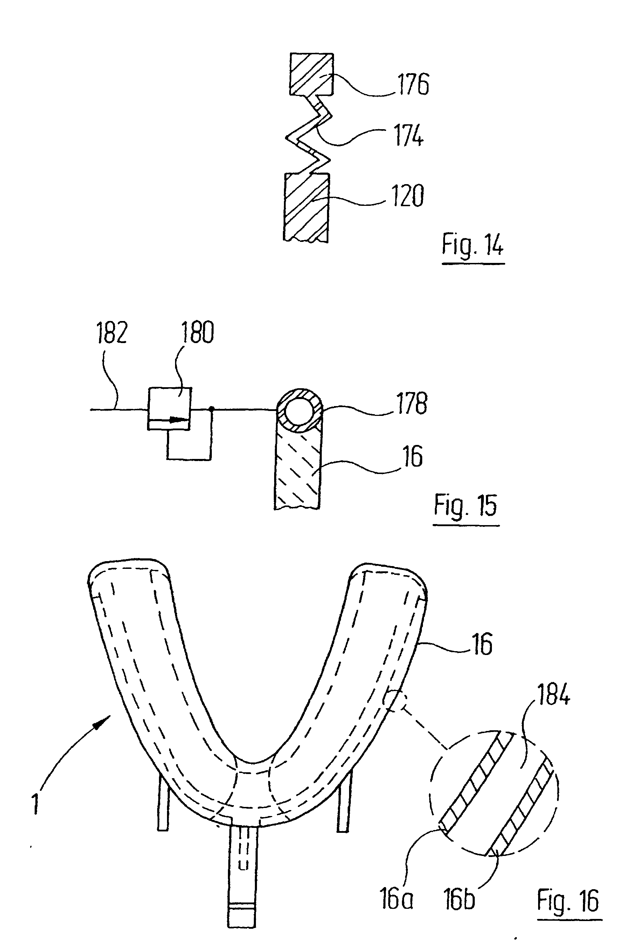

Um eine gute Anpassung des freien Randes des Löffelrandteiles 118 an die im Mund eines Patienten vorgefundene Geometrie zu erhalten, kann man den randnahen Abschnitt der Randwand 16 balgähnlich ausbilden, wie in Figur 14 bei 174 gezeigt. Der Balgabschnitt 174 kann dann eine weiche angeformte oder aufgesetzte Dichtung 176 tragen.

Gemäß Figur 15 kann man auf dem freien Rand der Randwand 16 auch eine schlauchförmige Dichtung 178 vorsehen, die elastisch verformbar ist.

In Abwandlung des Ausführungsbeispieles nach Figur 15 kann man die Dichtung 178 auch als flexiblen Schlauch ausbilden und über einen Druckregler 180 mit einer Druckluftleitung 182 verbinden, wie in Figur 15 zusätzlich dargestellt ist.

Schließlich kann man gemäß Figur 16 die Randwand 16 auch als Doppelwand ausbilden, die aus Einzelwänden 16a und 16b besteht. Der zwischen den Einzelwänden 16a undl6b liegende Raum 184 wird dann am einen Ende des Löffels mit einer Kühlwasser-Speiseleitung und am anderen Ende mit einer Kühlwasser-Rückführleitung verbunden. Auf diese Weise kann man im Löffel auch vorgewärmte (temperierte) Abformmaterialien verwenden, die unter definierter Abkühlung erhärten.

Für die Zwecke der vorliegenden Erfindung gut geeignete Abformmaterialien sind insbesondere Silikone, z.B. Polysiloxane oder Polyether jeweils mit zugehörigen Härter-, Inhibitor- oder Katalysatormaterialien. Selbstverständlich können jedoch auch andere beliebige Abformmaterialen, wie z.B. Abdruckgips oder Alginate, etc. vorteilhaft verwendet werden.

In Verbindung mit der doppelwandigen Löffelform können auch Hydrokolloid-Abformmaterialien vewendet werden.

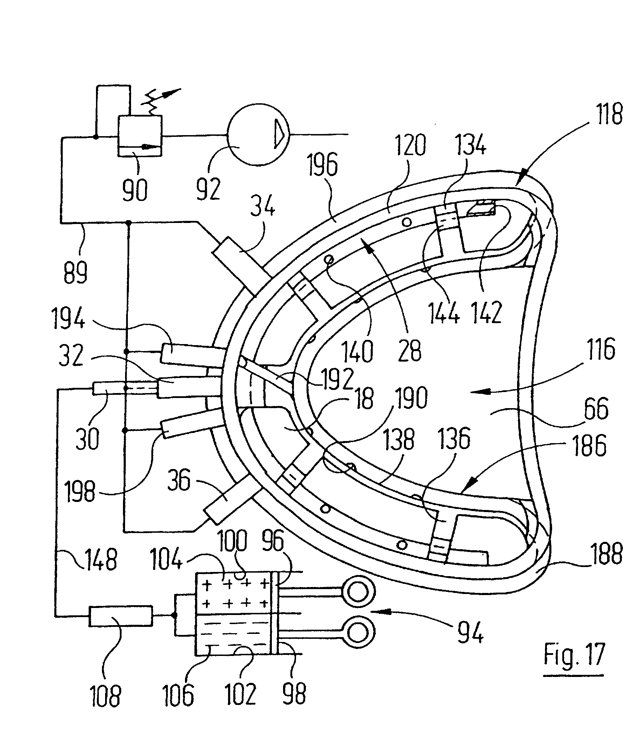

Bei dem Ausführungsbeispiel nach Figur 17 ist zusätzlich zum Abformmaterial-Verteilrohr 28 ein Vakuum-Verteilrohr 186 vorgesehen, welches ebenfalls an den Unterdruckregler 90 angeschlossen ist. Das Verteilrohr 186 hat hintere Anschlußenden 188 sowie in seiner Wand ausgebildete Ansaugöffnungen 190. Die Ansaugöffnungen 190 liegen den Austrittsöffnungen 140 gegenüber. Der mittlere Abschnitt des Vakuumverteilrohres 186 ist über eine Leitung 192 mit einem weiteren Vakuum-Anschlußstutzen 194 verbunden, der an die gemeinsame Unterdruckleitung 89 angeschlossen ist. Ähnlich sind die Anschlußenden 188 des Vakuum-Verteilrohres 186 an eine Leitung 196 angeschlossen, die mit einem weiteren Vakuum-Anschlußstutzen 198 in Verbindung steht. Letzterer ist wiederum an die gemeinsame Unterdruckleitung 89 angeschlossen.

Das Abformmaterial-Verteilrohr 28 und das Vakuum-Verteilrohr 186 können in einer gemeinsamen Ebene liegen, welche z.B. in Höhe des Zahnhalses verläuft, sie können aber auch in unterschiedlicher Höhe angeordnet sein, wobei eines der Verteilrohre in Höhe des Zahnhalses, das andere der Verteilrohre auf Höhe der mittleren Höckerspitzen bzw. der Kauflächen oder Inzisalkanten liegt, so daß sich in zur Längserstreckung des Abformraumes senkrechter Schnittebene gesehen ein schräg ansteigender oder schräg abfallender Fließweg des Abformmateriales ergibt.

Im einzelnen können die Austrittsöffnungen 140 und Ansaugöffnungen 190 jeweils einer Zahnposition oder einer Mehrzahl von Zahnpositionen zugeordnet sein.

Es versteht sich, daß man in Abwandlung des Ausführungsbeispieles nach Figur 17 die Lage von Abformmaterial-Verteilrohr 28 und von Vakuum-Verteilrohr 186 vertauschen kann. Das Abformmaterial fließt dann radial von innen nach außen statt wie beim Ausführungsbeispiel nach Figur 17 von außen nach innen. Dies zeigt, daß man Zufuhr und Abfuhr bezüglich der Lage vertauschen kann.

Die Lage der Austrittsöffnungen 140 und der Ansaugöffnungen 190 kann auch so gewählt werden, daß sie mit interdentalen Räumen fluchten. Auch kann man den Anstellwinkel der Achsen der Austrittsöffnungen 140 und der Ansaugöffnungen 190 ändern, z.B. schräg nach oben zur Zahnreihe hin ansteigend wählen.

Um gleichzeitig einen Materialfluß von hinten nach vorne überlagern zu können und evt. auf die Vakuum-Anschlußstutzen 32, 34, 36 verzichten zu können, kann man die Austrittsöffnungen 140 und die Ansaugöffnungen 190 mit von hinten nach vorne zunehmendem Durchmesser gestalten.

In Abwandlung hiervon kann man auch den zentralen Vakuum-Anschlußstutzen 32 beibehalten, um bis ans Ende des Füllens des Abformraumes ein Vakuum im Abformraum aufrechtzuerhalten und aus diesem Flüssigkeiten abzusaugen.

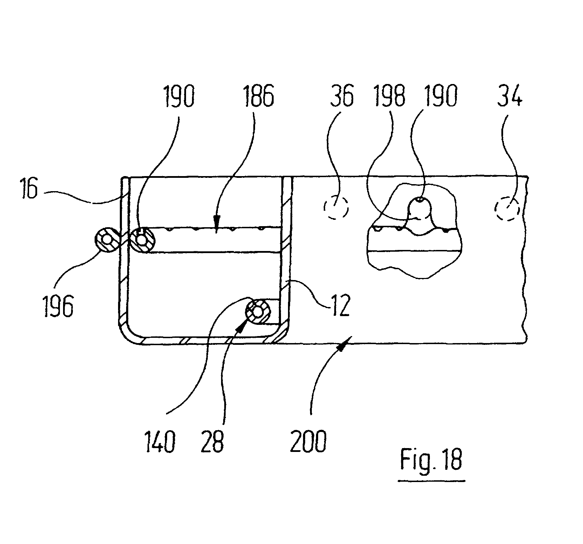

Beim Ausführungsbeispiel nach Figur 18 ist ein einstückiges Löffelhauptteil 200 aus etwas biegsamem transparentem Kunststoff vorgesehen, welches in Aufsicht gesehen im wesentlichen U- oder V-förmig ist und im wesentlichen rechteckig U-förmigen transversalen Querschnitt hat

Die außenliegende Randwand 16 trägt dicht angeclipst das Vakuumverteilrohr 186 (inklusive Anschlußende 188, Leitung 182 sowie Anschlußelemente 194 und 198). Die innenliegende Randwand 12 trägt dicht angeclipst das Abformmaterial-Verteilrohr 28 (inklusive Anschlußelement 30). Auf diese Weise können die schlecht zu reinigenden vom Abformmaterial durchströmten oder erreichten Rohre zusammen mit dem Abdruck leicht vom Löffelhauptteil 200 getrennt werden.

Das Vakuum-Verteilrohr 28 ist in der Nachbarschaft des Bodens der Abformrinne angeordnet, das Vakuum-Verteilrohr 186 in Höhe des Zahnhalses. Die Vakuum-Ansaugöffnungen 190 weisen nach oben, die Abformmaterial-Austrittsöffnungen 140 schräg nach oben. Auf diese Weise erhält man eine Füllung des Abformraumes mit Abformmaterial, bei welcher sich die Front des letzteren zum einen von hinten nach vorne, zum anderen von unten nach oben und gleichzeitig von innen nach außen bewegt.

Die Größe und/oder der Abstand der Abformmaterial-Austrittsöffnungen 140 und/oder der Vakuum-Ansaugöffnungen 190 kann sich in Längsrichtung der Verteilrohrrohre ändern, um eine gesteuerte Zufuhr des Abformmateriales zu ermöglichen, insbesondere die Front des Abformmateriales so zu führen, daß sie auf eine bis zuletzt offenbleibende Vakuum-Ansaugöffnung oder ein ggf. vorgesehenes bis zu letzt offenbleibendes Vakuum-Anschlußelement zuläuft. Bei der oben beschriebenen Geometrie kann hierzu der Durchmesser unter gleichem Abstand angeordneter Abformmaterial-Austrittsöffnungen und Vakuum-Ansaugöffnungen von hinten nach vorne abnehmen.

Beim Ausführungsbeispieles nach Figur 18 konnten die Vakuumanschlußelemente 32, 34, 46 entfallen, da das Vakuum-Verteilrohr 186 bis in den vorderen Abschnitt mit Ansaugöffnungen 190 versehen ist.

## Patentansprüche

1. Vorrichtung zum Herstellen von Zahnabdrücken, mit einem Löffel (1), welcher einen ganzen Zahnbogen überdecken kann und zu einer Längsmittelebene symmetrische Gestalt aufweist und einen gekrümmten Abformraum (52) vorgibt und welcher in seinem Verlauf grob dem Kieferverlauf angepaßt ist, wobei die freien Ränder der Löffelwände (12, 16, 26) so verlaufen, daß sie zusammen mit Weichgeweben des Mundes eines Patienten eine Dichtstelle bilden können, und welcher mit mindestens einem mit dem Löffelinneren in Verbindung stehenden Abformmaterial-Anschlußelement (30) versehen ist, und mit einer Quelle (94 bis 108) für flüssiges härtbares Abformmaterial (114), welche mit dem Abformmaterial-Anschlußelement (30) verbunden (148) ist, wobei der Löffel (1) eine Mehrzahl mit dem Löffelinneren in Verbindung stehender Vakuum-Anschlußelemente (32, 34, 36, 194, 198) aufweist, welche mit einer Unterdruckquelle (90, 92) verbunden sind und symmetrisch zu einer Längsmittelebene des Löffels (1) angeordnet sind, **dadurch gekennzeichnet, daß** die Unterdruckquelle (90, 92) eine Druckabsenkung im Bereich zwischen 10 und 500 mbar einstellt, daß das Abformmaterial-Anschlußelement (30) in der Mitte des vorderen Löffelbereiches angeordnet ist und zwei Vakuum-Anschlußelemente (34, 36) symmetrisch zum Abformmaterial-Anschlußelement (30) bei der Mitte des vorderen Löffelbereiches angeordnet sind und daß sich in Längsrichtung des gekrümmten Abformraumes (52) ein Abformmaterial-Verteilrohr (28) erstreckt, das ebenfalls zur Längsmittelebene des Löffels symmetrisch ist und sich durch die beiden Schenkel des U-förmige Aufsichtsgeometrie aufweisenden Abformraumes (52) erstreckt und an seinen Enden offen (142) ist und bei seiner Mitte mit dem Abformmaterial-Anschlußstutzen (30) in Verbindung steht.

2. Vorrichtung nach Anspruch 1, **dadurch gekennzeichnet, daß** die Unterdruckquelle (90, 92) eine Druckabsenkung zwischen 10 und 200 mbar einstellt, vorzugsweise zwischen 50 und 150 mbar.

3. Vorrichtung nach Anspruch 2, **dadurch gekennzeichnet, daß** die Unterdruckquelle eine Saugeinrichtung (92) und einen deren Saugöffnung vorgeschalteten Unterdruckregler (90) aufweist.

4. Vorrichtung nach Anspruch 3, **dadurch gekennzeichnet, daß** die Saugeinrichtung eine Venturi-Düse (162) aufweist, deren Speiseeingang mit einer Druckluftleitung (164) verbunden ist.

5. Vorrichtung nach einem der Ansprüche 1 bis 4, **dadurch gekennzeichnet, daß** das Abformmaterial-Verteilrohr (28) zusätzlich mindestens eine zum Löffelinneren hin offene Austrittsöffnung (140) in der Rohrwand aufweist, wobei nochmals bevorzugt für jede Zahnposition eine zur Zahnposition weisende Austrittsöffnung vorgesehen ist.

6. Vorrichtung nach einem der Ansprüche 1 bis 5, **dadurch gekennzeichnet, daß** zumindest ein Teil der Vakuum-Anschlußelemente (32, 34, 36, 194, 198) mit zugeordneten Vakuum-Verteilleitungen (186) in Verbindung steht, die sich über eine Mehrzahl von Zahnpositionen erstrecken und mindestens eine Ansaugöffnung (190) aufweisen, vorzugsweise für jede der Zahnpositionen eine Ansaugöffnung (190) aufweisen.

7. Vorrichtung nach einem der Ansprüche 1 bis 6, **dadurch gekennzeichnet, daß** die Vakuum-Anschlußelemente (32, 34, 36, 194, 198) über eine gemeinsame Unterdruckleitung (89) mit der Unterdruckquelle (90, 92) verbunden sind.

8. Vorrichtung nach einem der Ansprüche 1 bis 7, **dadurch gekennzeichnet, daß** die Abformmaterial-Anschlußelemente (30) und die Vakuum-Anschlußelemente (32, 34, 36, 194, 198) von einem als Wegwerfteil ausgebildeten Löffelabschnitt (4; 118) getragen sind, während der wiederverwendete Rest des Löffels als sterilisierbares Teil ausgebildet ist.

9. Vorrichtung nach einem der Ansprüche 1 bis 8, **dadurch gekennzeichnet, daß** die Abformmaterial-Anschlußelemente (30) und die Vakuum-Anschlußelemente (32, 34, 36, 194, 198) von einem mittigen Abschnitt (146) einer äußeren Randwand (16) des Löffels (1) getragen sind, wobei der mittige Abschnitt (146) der äußeren Randwand (16) ggf. in Kombination mit den Anschlußelementen vorzugsweise als Handgriff ausgebildet ist.

10. Vorrichtung nach Anspruch 9, **dadurch gekennzeichnet, daß** das Abformmaterial-Anschlußelement (30) in einer Schürze (146) der äußeren Randwand (120) des Wegwerf-Löffelteiles (118) angeordnet ist, welches in eine komplementäre Ausnehmung (147) der äußeren Randwand (16) des wiederverwendeten Löffelteiles (116) eingreift.

11. Vorrichtung nach einem der Ansprüche 8 bis 10, **dadurch gekennzeichnet, daß** die zusammenarbeitenden Ränder von wiederverwendetem Löffelteil (116) und Wegwerf-Löffelteil (118) über eine Nut-/Feder-Verbindung (122, 124) und/oder eine Dichtung (130; 132) gegeneinander abgedichtet sind.

12. Vorrichtung nach einem der Ansprüche 1 bis 11, **dadurch gekennzeichnet, daß** der freie Rand des Löffels (1) eine elastisch nachgiebige Dichtung (70; 78; 176; 178) trägt.

13. Vorrichtung nach Anspruch 12, **dadurch gekennzeichnet, daß** die Dichtung (176) über einen Biegeabschnitt (174) vom Wegwerf-Löffelteil (118) getragen ist.

14. Vorrichtung nach Anspruch 12 oder 13, **dadurch gekennzeichnet, daß** die Dichtung (178) ein aufblasbarer flexibler Hohlkörper ist, der mit einer Druckmittelquelle (182) verbunden ist, oder ein elastisch verformbarer Hohlkörper ist.

15. Vorrichtung nach einem der Ansprüche 8 bis 14, **dadurch gekennzeichnet, daß** das Wegwerf-Löffelteil (118) einen mindestens einen in Längsrichtung des Abformraumes (52) verlaufenden Materiallängssteg (138) und eine Mehrzahl zwischen diesem und der außenliegenden Randwand (120) des Wegwerf-Löffelteiles (118) verlaufender Querstege (136) aufweist, wobei die Materiallängsstege (138) und die Querstege (136) so ausgebildet sind, daß sie ein Fließen des Abformmateriales in Längsrichtung des Zahnbogens und/oder hierzu senkrechter Richtung gestatten.

16. Vorrichtung nach einem der Ansprüche 8 bis 15, **dadurch gekennzeichnet, daß** das Abformmaterial-Verteilrohr (28) mit dem Löffelrandteil (118) verbunden, insbesondere ganz oder teilweise in dieses eingebettet ist.

17. Vorrichtung nach einem der Ansprüche 1 bis 16, **dadurch gekennzeichnet, daß** der Löffel (1) ganz oder teilweise aus transparentem Material, insbesondere transparentem Kunststoffmaterial hergestellt ist und vorzugsweise zusätzlich auch die Vakuum-Anschlußelemente (32, 34, 36) aus transparentem Material, insbesondere transparentem Kunststoffmaterial hergestellt sind.

18. Vorrichtung nach einem der Ansprüche 1 bis 17, **dadurch gekennzeichnet, daß** ein Abschnitt des Innenraumes des Löffels (1) durch eine Dichtwand (150) vom Abformraum (52) getrennt ist, wobei der freie Rand der Dichtwand (150) dicht auf intraorales Weichgewebe aufsetzbar ist und daß in den durch die Dichtwand (150) begrenzten Saugraum (152) eine getrennte Saugleitung (154) führt, die mit einem getrennten Vakuum-Anschlußstutzen (156) verbunden ist, welcher mit einer Unterdruckquelle, insbesondere der mit dem Abformraum (52) in Verbindung stehenden Unterdruckquelle (90, 92) verbunden ist.

19. Vorrichtung nach einem der Ansprüche 1 bis 18, **dadurch gekennzeichnet, daß** der Durchtrittsquerschnitt der Anschlußelemente (30) für das Abformmaterial der Fläche eines Kreises mit einem Durchmesser von etwa 2 bis 8 mm, vorzugsweise etwa 4 bis 6 mm entspricht.

20. Vorrichtung nach einem der Ansprüche 1 bis 19, **dadurch gekennzeichnet, daß** die Abformmaterialquelle (94 bis 108) das Abformmaterial unter Überdruck, vorzugsweise einstellbarem Überdruck bereitstellt.

21. Vorrichtung nach einem der Ansprüche 1 bis 20, **dadurch gekennzeichnet, daß** die Abformmaterialquelle (94 bis 108) ein einen Härtungskatalysator enthaltendes Abformmaterial bereitstellt, wobei der Katalysator so gewählt und dosiert ist und der Unterdruck im Abformraum (52) und der Abgabedruck der Abformmaterialquelle (94 bis 108) so aufeinander abgestimmt sind, daß das Aushärten des Abformmateriales erst nach vollständigem Füllen des Abformraumes (52) erfolgt.

22. Vorrichtung nach einem der Ansprüche 1 bis 21, **gekennzeichnet durch** eine mit dem Abformmaterial-Anschlußelement (30) verbindbare Spülfluidquelle (170).

23. Vorrichtung nach Anspruch 22, **dadurch gekennzeichnet, daß** die Spülfluidquelle (170) ein mindestens einen Wirkstoff enthaltendes Fluid bereitstellt, z.B. eine Wirkstoffe enthaltende Flüssigkeit oder ein Wirkstoff-Aerosol oder ein Gas.

24. Vorrichtung nach einem der Ansprüche 1 bis 23, **dadurch gekennzeichnet, daß** bei oder in den Vakuumanschlußelementen (32, 34, 36) ein Abformmaterial-Sperrelement (156, 158, 160) angeordnet ist.

25. Vorrichtung nach Anspruch 24, **dadurch gekennzeichnet, daß** das Abformmaterial-Sperrelement (156, 158, 160) ein Filterelement umfaßt.

26. Vorrichtung nach Anspruch 24 oder 25, **dadurch gekennzeichnet, daß** das Abformmaterial-Sperrelement zusätzliches Härtermaterial und/oder zusätzliches Katalysatormaterial umfaßt.

27. Vorrichtung nach einem der Ansprüche 1 bis 26, **dadurch gekennzeichnet, daß** das Abformmaterial-Anschlußelement (30) ein Verschlußmittel aufweist.

28. Vorrichtung nach Anspruch 27, **dadurch gekennzeichnet, daß** das Verschlußmittel ein Ventil (110) oder eine Siegelfolie gebildet ist, welches bzw. welche beim Anschließen der Quelle (94 bis 108) für das flüssige härtbare Abformmaterial (114) an das Abformmaterial-Anschlußelement (30) zwangsweise geöffnet wird.

29. Vorrichtung nach einem der Ansprüche 1 bis 28, **dadurch gekennzeichnet, daß** die Rohrwand des Abformmaterial-Verteilrohres (28) eine Mehrzahl in Längsrichtung beabstandeter Austrittsöffnungen (140) aufweist, die sich zumindest teilweise im Durchmesser und/oder ihrer Ausrichtung unterscheiden.

30. Vorrichtung nach einem der Ansprüche 6 bis 29, **dadurch gekennzeichnet, daß** Rohrwände der Vakuum-Verteilleitungen (186) eine Mehrzahl in Längsrichtung beabstandeter Austrittsöffnungen (190) aufweist, die sich zumindest teilweise im Durchmesser und/oder ihrer Ausrichtung unterscheiden.

31. Verwendung einer Vorrichtung nach einem der Ansprüche 1 bis 30, **dadurch gekennzeichnet, daß** sie in einem Dentallabor erfolgt.

## Claims

1. A device for producing dental impressions, having a tray (1) which can cover a whole row of teeth, has a symmetrical shape with respect to a longitudinal central plane, forms a curved casting space (52) and has a course which is roughly adapted to the course of the jaw, the free edges of the tray walls (12, 16, 26) extending such that they can form a sealed point in conjunction with the soft tissue of the mouth of a patient, and which is provided with at least one casting-material connection element (30) which is in communication with the inside of the tray, and having a source (94 to 108) for liquid hardenable casting material (114), which is connected to the casting-material connection element (30), the tray (1) having a plurality of vacuum connection elements (32, 34, 36, 194, 198) which are in communication with the inside of the tray, are connected to a vacuum source (90, 92) and are arranged symmetrically with respect to a longitudinal central plane of the tray (1), **characterised in that** the vacuum source (90, 92) controls a drop in pressure in the range between 10 and 500 mbar, **in that** the casting-material connection element (30) is arranged in the centre of the front tray region and two vacuum connection elements (34, 36) are arranged symmetrically with respect to the casting-material connection element (30) near to the centre of the front tray region, and **in that** a casting-material distribution tube (28) extends in the longitudinal direction of the curved casting space (52), said casting-material distribution tube likewise being symmetrical with respect to the longitudinal central plane of the tray and extending through the two limbs of the casting space (52), which is U-shaped in plan view, and being open at its ends (142) and being in communication with the casting-material connection piece (30) near to its centre.

2. A device according to Claim 1, **characterised in that** the vacuum source (90, 92) controls a drop in pressure of between 10 and 200 mbar, preferably between 50 and 150 mbar.

3. A device according to Claim 2, **characterised in that** the vacuum source has a suction device (92) and a vacuum controller (90) connected upstream of its suction orifice.

4. A device according to Claim 3, **characterised in that** the suction device has a Venturi nozzle (162) whereof the feed opening is connected to a compressed-air line (164).

5. A device according to one of Claims 1 to 4,
**characterised in that**, in the tube wall, the casting-material distribution tube (28) additionally has at least one exit orifice (140) which is open towards the inside of the tray, an exit orifice facing the tooth position again preferably being provided for each tooth position.

6. A device according to one of Claims 1 to 5,
**characterised in that** at least some of the vacuum connection elements (32, 34, 36, 194, 198) are in communication with associated vacuum distribution lines (186) which extend over a plurality of tooth positions and have at least one suction orifice (190), preferably one suction orifice (190) for each of the tooth positions.

7. A device according to one of Claims 1 to 6,
**characterised in that** the vacuum connection elements (32, 34, 36, 194, 198) are connected to the vacuum source (90, 92) by way of a common vacuum line (89).

8. A device according to one of Claims 1 to 7,
**characterised in that** the casting-material connection elements (30) and the vacuum connection elements (32, 34, 36, 194, 198) are supported by a tray portion (4; 118) constructed as a disposable part, whilst the reusable remainder of the tray is constructed as a sterilisable part.

9. A device according to one of Claims 1 to 8,
**characterised in that** the casting-material connection elements (30) and the vacuum connection elements (32, 34, 36, 194, 198) are supported by a central portion (146) of an outer edge wall (16) of the tray (1), the central portion (146) of the outer edge wall (16) preferably being constructed as a handle, possibly in combination with the connection elements.

10. A device according to Claim 9, **characterised in that** the casting-material connection element (30) is arranged in an apron (146) of the outer edge wall (120) of the disposable tray part (118), which engages in a complementary cutout (147) in the outer edge wall (16) of the reusable tray part (116).

11. A device according to one of Claims 8 to 10,
**characterised in that** the cooperating edges of the reusable tray part (116) and the disposable tray part (118) are sealed with respect to one another by way of a tongue-and-groove connection (122, 124) and/or a seal (130; 132).

12. A device according to one of Claims 1 to 11,
**characterised in that** the free edge of the tray (1) supports a resiliently yielding seal (70; 78; 176; 178).

13. A device according to Claim 12, **characterised in that** the seal (176) is supported by way of a bending portion (174) of the disposable tray part (118).

14. A device according to Claim 12 or 13, **characterised in that** the seal (178) is an inflatable flexible hollow body connected to a pressure-medium source (182), or a resiliently deformable hollow body.

15. A device according to one of Claims 8 to 14,
**characterised in that** the disposable tray part (118) has at least one longitudinal material web (138) extending in the longitudinal direction of the casting space (52) and a plurality of transverse webs (136) extending between said longitudinal web and the outer edge wall (120) of the disposable tray part (118), the longitudinal material webs (138) and the transverse webs (136) being constructed such that they enable the casting material to flow in the longitudinal direction of the row of teeth and/or the direction perpendicular thereto.

16. A device according to one of Claims 8 to 15,
**characterised in that** the casting-material distribution tube (28) is connected to the tray edge part (118), particularly such that it is completely or partially embedded therein.

17. A device according to one of Claims 1 to 16,
**characterised in that** the tray (1) is completely or partially manufactured from a transparent material, particularly a transparent plastic material, and the vacuum connection elements (32, 34, 36) are preferably also manufactured from a transparent material, particularly a transparent plastic material.

18. A device according to one of Claims 1 to 17,
**characterised in that** a portion of the inside of the tray (1) is separated from the casting space (52) by a sealing wall (150), it being possible to place the free edge of the sealing wall (150) on the intra-oral soft tissue in sealed manner, and **in that** a separate suction line (154) leads into the suction space (152) delimited by the sealing wall (150), said suction line being connected to a separate vacuum connection piece (156) which is connected to a vacuum source, particularly the vacuum source (90, 92) which is in communication with the casting space (52).

19. A device according to one of Claims 1 to 18,
**characterised in that** the opening cross-section of the connection elements (30) for the casting material corresponds to the area of a circle having a diameter of approximately 2 to 8 mm, preferably approximately 4 to 6 mm.

20. A device according to one of Claims 1 to 19,
**characterised in that** the casting-material source (94 to 108) supplies the casting material under excess pressure, preferably under adjustable excess pressure.

21. A device according to one of Claims 1 to 20,
**characterised in that** the casting-material source (94 to 108) supplies a casting material containing a hardening catalyst, the catalyst being selected and metered - and the vacuum in the casting space (52) and the delivery pressure of the casting-material source (94 to 108) being adapted to one another - such that the casting material only hardens after the casting space (52) has been filled completely.

22. A device according to one of Claims 1 to 21,
**characterised by** a rinsing-fluid source (170) which can be connected to the casting-material connection element (30).

23. A device according to Claim 22, **characterised in that** the rinsing-fluid source (170) supplies a fluid containing at least one active substance, e.g. a liquid containing active substances or an active-substance aerosol or a gas.

24. A device according to one of Claims 1 to 23,
**characterised in that** a casting-material blocking element (156, 158, 160) is arranged near to, or in, the vacuum connection elements (32, 34, 36).

25. A device according to Claim 24, **characterised in that** the casting-material blocking element (156, 158, 160) comprises a filter element.

26. A device according to Claim 24 or 25, **characterised in that** the casting-material blocking element comprises additional hardening material and/or additional catalyst material.

27. A device according to one of Claims 1 to 26,
**characterised in that** the casting-material connection element (30) has a closing means.

28. A device according to Claim 27, **characterised in that** the closing means is formed by a valve (110) or a sealing film which is necessarily opened when the source (94 to 108) for the liquid hardenable casting material (114) is connected to the casting-material connection element (30).

29. A device according to one of Claims 1 to 28,
**characterised in that** the tube wall of the casting-material distribution tube (28) has a plurality of exit orifices (140) which are spaced in the longitudinal direction and differ at least partially in terms of their diameter and/or their alignment.

30. A device according to one of Claims 6 to 29,
**characterised in that** the tube walls of the vacuum distribution lines (186) have a plurality of exit orifices (190) which are spaced in the longitudinal direction and differ at least partially in terms of their diameter and/or their alignment.

31. A use for a device according to one of Claims 1 to 30,
**characterised in that** it takes place in a dental laboratory.

## Revendications

1. Dispositif pour l'obtention d'empreintes dentaires, avec un porte-empreinte (1), qui peut couvrir une arcade dentaire complète, présente une forme symétrique à un plan médian longitudinal, prédéfinit une chambre de moulage courbe (52) et possède une allure grossièrement adaptée à celle de la mâchoire, les bords libres des parois (12, 16, 26) du porte-empreinte s'étendant de telle sorte qu'ils peuvent former un point d'étanchéité conjointement avec des tissus mous de la bouche d'un patient, et qui est pourvu d'au moins un élément (30) de raccordement de matériau de moulage relié à l'intérieur du porte-empreinte, et avec une source (94 à 108) de matériau de moulage liquide durcissable (114), qui est reliée à l'élément (30) de raccordement de matériau de moulage, le porte-empreinte (1) présentant une pluralité d'éléments (32, 34, 36, 194, 198) de raccordement de vide reliés à l'intérieur du porte-empreinte, qui sont reliés à une source de dépression (90, 92) et sont disposés symétriquement à un plan médian longitudinal du porte-empreinte (1), **caractérisé en ce que** la source de dépression (90, 92) règle un abaissement de pression dans la plage comprise entre 10 et 500 mbars, **en ce que** l'élément (30) de raccordement de matériau de moulage est disposé au milieu de la région avant du porte-empreinte, et deux éléments (34, 36) de raccordement de vide sont disposés symétriquement à l'élément (30) de raccordement de matériau de moulage au milieu de la région avant du porte-empreinte, et **en ce qu'**un tube (28) de distribution de matériau de moulage s'étend dans la direction longitudinale de la chambre de moulage courbe (52), tube qui est également symétrique au plan médian longitudinal du porte-empreinte, s'étend à travers les deux branches de la chambre de moulage (52) présentant une forme géométrique de U en vue de dessus, est ouvert (142) à ses extrémités et est relié en son milieu à la tubulure (30) de raccordement de matériau de moulage.

2. Dispositif selon la revendication 1, **caractérisé en ce que** la source de dépression (90, 92) règle un abaissement de pression entre 10 et 200 mbars, de préférence entre 50 et 150 mbars.

3. Dispositif selon la revendication 2, **caractérisé en ce que** la source de dépression présente un équipement d'aspiration (92) et un régulateur de dépression (90) monté en amont de l'ouverture d'aspiration de cet équipement.

4. Dispositif selon la revendication 3, **caractérisé en ce que** l'équipement d'aspiration présente un venturi (162) dont l'entrée d'alimentation est raccordée à une conduite d'air comprimé (164).

5. Dispositif selon l'une quelconque des revendications 1 à 4, **caractérisé en ce que** le tube (28) de distribution de matériau de moulage présente en plus dans la paroi du tube au moins une ouverture de sortie (140) ouverte vers l'intérieur du porte-empreinte et, d'une manière encore plus préférentielle, une ouverture de sortie est prévue pour chaque position de dent, ouverture qui est dirigée vers la position de dent.

6. Dispositif selon l'une quelconque des revendications 1 à 5, **caractérisé en ce qu'**au moins certains des éléments (32, 34, 36, 194, 198) de raccordement de vide sont reliés à des conduites associées (186) de distribution de vide qui s'étendent sur une pluralité de positions de dent et présentent au moins une ouverture d'aspiration (190), de préférence présentent une ouverture d'aspiration (190) pour chacune des positions de dent.

7. Dispositif selon l'une quelconque des revendications 1 à 6, **caractérisé en ce que** les éléments (32, 34, 36, 194, 198) de raccordement de vide sont reliés à la source de dépression (90, 92) par l'intermédiaire d'une conduite de dépression commune (89).

8. Dispositif selon l'une quelconque des revendications 1 à 7, **caractérisé en ce que** les éléments (30) de raccordement de matériau de moulage et les éléments (32, 34, 36, 194, 198) de raccordement de vide sont portés par une partie de porte-empreinte (4; 118) conçue comme partie jetable, tandis que le reste, réutilisé, du porte-empreinte est conçu comme partie stérilisable.

9. Dispositif selon l'une quelconque des revendications 1 à 8, **caractérisé en ce que** les éléments (30) de raccordement de matériau de moulage et les éléments (32, 34, 36, 194, 198) de raccordement de vide sont portés par une partie médiane (146) d'une paroi de bord extérieur (16) du porte-empreinte (1), la partie médiane (146) de la paroi de bord extérieur (16) étant de préférence réalisée, éventuellement en combinaison avec les éléments de raccordement, sous forme de poignée.

10. Dispositif selon la revendication 9, **caractérisé en ce que** l'élément (30) de raccordement de matériau de moulage est disposé dans un tablier (146) de la paroi de bord extérieur (120) de la partie de porte-empreinte jetable (118), qui s'engage dans un évidement complémentaire (147) de la paroi de bord extérieur (16) de la partie de porte-empreinte réutilisée (116).

11. Dispositif selon l'une quelconque des revendications 8 à 10, **caractérisé en ce que** les bords coopérants de la partie de porte-empreinte réutilisée (116) et de la partie de porte-empreinte jetable (118) sont mutuellement étanchés au moyen d'un assemblage à rainure et languette (122, 124) et/ou d'une garniture d'étanchéité (130; 132).

12. Dispositif selon l'une quelconque des revendications 1 à 11, **caractérisé en ce que** le bord libre du porte-empreinte (1) porte une garniture d'étanchéité (70 ; 78 ; 176 ; 178) élastiquement flexible.

13. Dispositif selon la revendication 12, **caractérisé en ce que** la garniture d'étanchéité (176) est portée par la partie de porte-empreinte jetable (118) par l'intermédiaire d'un segment pliable (174).

14. Dispositif selon la revendication 12 ou 13, **caractérisé en ce que** la garniture d'étanchéité (178) est un corps creux flexible gonflable, qui est relié à une source (182) de fluide sous pression, ou un corps creux élastiquement déformable.

15. Dispositif selon l'une quelconque des revendications 8 à 14, **caractérisé en ce que** la partie de porte-empreinte jetable (118) présente au moins une nervure longitudinale de matériau (138) s'étendant dans la direction longitudinale de la chambre de moulage (52) et une pluralité de nervures transversales (136) s'étendant entre cette nervure longitudinale et la paroi de bord extérieur (120) de la partie de porte-empreinte jetable (118), les nervures longitudinales de matériau (138) et les nervures transversales (136) étant configurées de telle sorte qu'elles autorisent un écoulement du matériau de moulage dans la direction longitudinale de l'arcade dentaire et/ou en direction perpendiculaire.

16. Dispositif selon l'une quelconque des revendications 8 à 15, **caractérisé en ce que** le tube (28) de distribution de matériau de moulage est assemblé à la partie de bord de porte-empreinte (118), notamment est totalement ou partiellement incorporé dans celle-ci.

17. Dispositif selon l'une quelconque des revendications 1 à 16, **caractérisé en ce que** le porte-empreinte (1) est fabriqué totalement ou partiellement en matériau transparent, notamment en matière plastique transparente, et en outre, de préférence, les éléments (32, 34, 36) de raccordement de vide sont également fabriqués en matériau transparent, notamment en matière plastique transparente.

18. Dispositif selon l'une quelconque des revendications 1 à 17, **caractérisé en ce qu'**une partie de l'intérieur du porte-empreinte (1) est séparée de la chambre de moulage (52) par une paroi étanche (150), le bord libre de la paroi étanche (150) pouvant être posé en étanchéité sur du tissu mou intra-buccal, et **en ce qu'**une conduite séparée d'aspiration (154) est dirigée dans la chambre d'aspiration (152) délimitée par la paroi étanche (150), conduite qui est reliée à une tubulure séparée (156) de raccordement de vide, laquelle est reliée à une source de dépression, notamment à la source de dépression (90, 92) reliée à la chambre de moulage (52).

19. Dispositif selon l'une quelconque des revendications 1 à 18, **caractérisé en ce que** la section de passage des éléments (30) de raccordement pour le matériau de moulage correspond à la surface d'un cercle d'un diamètre d'environ 2 à 8 mm, de préférence d'environ 4 à 6 mm.

20. Dispositif selon l'une quelconque des revendications 1 à 19, **caractérisé en ce que** la source (94 à 108) de matériau de moulage fournit le matériau de moulage en surpression, de préférence en surpression réglable.

21. Dispositif selon l'une quelconque des revendications 1 à 20, **caractérisé en ce que** la source (94 à 108) de matériau de moulage fournit un matériau de moulage contenant un catalyseur de durcissement, le catalyseur étant choisi et dosé de telle sorte, et la dépression dans la chambre de moulage (52) et la pression de délivrance de la source (94 à 108) de matériau de moulage étant mutuellement adaptées de telle sorte, que le durcissement du matériau de moulage ne s'effectue qu'une fois que la chambre de moulage (52) est totalement remplie.

22. Dispositif selon l'une quelconque des revendications 1 à 21, **caractérisé par** une source (170) de fluide de rinçage pouvant être reliée à l'élément (30) de raccordement de matériau de moulage.

23. Dispositif selon la revendication 22, **caractérisé en ce que** la source (170) de fluide de rinçage fournit un fluide contenant au moins une substance active, par exemple un liquide contenant des substances actives, ou un aérosol de substance active, ou un gaz.

24. Dispositif selon l'une quelconque des revendications 1 à 23, **caractérisé en ce qu'**un élément (156, 158, 160) de blocage de matériau de moulage est disposé au niveau des éléments (32, 34, 36) de raccordement de vide ou dans ces éléments.

25. Dispositif selon la revendication 24, **caractérisé en ce que** l'élément (156, 158, 160) de blocage de matériau de moulage comprend un élément filtrant.

26. Dispositif selon la revendication 24 ou 25, **caractérisé en ce que** l'élément de blocage de matériau de moulage comprend du matériau durcisseur supplémentaire et/ou du matériau catalyseur supplémentaire.

27. Dispositif selon l'une quelconque des revendications 1 à 26,
**caractérisé en ce que** l'élément (30) de raccordement de matériau de moulage comprend un moyen d'obturation.

28. Dispositif selon la revendication 27, **caractérisé en ce que** le moyen d'obturation est formé par une soupape (110) ou un film de scellement qui est ouvert(e) de manière forcée lors du raccordement de la source (94 à 108) de matériau de moulage liquide durcissable (114) à l'élément (30) de raccordement de matériau de moulage.

29. Dispositif selon l'une quelconque des revendications 1 à 28, **caractérisé en ce que** la paroi tubulaire du tube (28) de distribution de matériau de moulage présente une pluralité d'ouvertures de sortie (140) distantes en direction longitudinale, qui se différencient au moins pour partie dans leur diamètre et/ou leur orientation.

30. Dispositif selon l'une quelconque des revendications 6 à 29, **caractérisé en ce que** les parois tubulaires des conduites (186) de distribution de vide présentent une pluralité d'ouvertures de sortie (190) distantes en direction longitudinale, qui se différencient au moins pour partie dans leur diamètre et/ou leur orientation.

31. Utilisation d'un dispositif selon l'une quelconque des revendications 1 à 30, **caractérisée en ce qu'**elle s'effectue dans un atelier de prothèse dentaire.
